(19) Europäisches Patentamt
European Patent Office
Office européen des brevets

(11) **EP 4 783 303 A1**

(12) **EUROPEAN PATENT APPLICATION**
published in accordance with Art. 153(4) EPC

(43) Date of publication:
**29.07.2026 Bulletin 2026/31**

(21) Application number: **24867454.1**

(22) Date of filing: **18.09.2024**

(51) International Patent Classification (IPC):
**H01M 10/633** (2014.01)

(52) Cooperative Patent Classification (CPC):
**H01M 10/633**

(86) International application number:
**PCT/CN2024/119454**

(87) International publication number:
**WO 2025/061046 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 18.09.2023 CN 202311202148
18.09.2023 CN 202322544303 U

(71) Applicant: **Solax Power Network
Technology (Zhejiang) Co., Ltd.
Zhejiang 311599 (CN)**

(72) Inventors:
• LIU, Chaohou
Hangzhou, Zhejiang 311599 (CN)
• SHI, Xinmiao
Hangzhou, Zhejiang 311599 (CN)
• GUAN, Haichao
Hangzhou, Zhejiang 311599 (CN)
• WEI, Qikang
Hangzhou, Zhejiang 311599 (CN)
• AN, Tianhong
Hangzhou, Zhejiang 311599 (CN)
• ZHAO, Yan
Hangzhou, Zhejiang 311599 (CN)

(74) Representative: **Murgitroyd & Company
165-169 Scotland Street
Glasgow G5 8PL (GB)**

(54) **BATTERY HEATING METHOD, APPARATUS AND SYSTEM, BATTERY PACK, BATTERY MODULE HEATING CONTROL CIRCUIT, ENERGY STORAGE SYSTEM AND READABLE MEDIUM**

(57) Disclosed in the present application are a battery heating method, apparatus and system, a battery pack, a battery module heating control circuit, an energy storage system, and a readable medium. The battery heating method includes: receiving a battery heating request sent by a second controller of a battery; in response to the battery heating request, acquiring at least one piece of energy information and management information of an energy supply end of an inverter; if the at least one piece of the energy information and the management information meets a preset heating condition, generating a heating permission instruction; sending the heating permission instruction to the second controller of the battery, so that the second controller establishes an electrical connection between a heating apparatus and an output end of the inverter; and controlling the inverter to use the energy supply end to supply power to the heating apparatus to heat the battery. The present application may heat the battery in real time, thereby preventing the battery from operating under low-temperature conditions, ensuring charging and discharging requirements of the battery, saving photovoltaic energy, and extending a service life of the battery.

FIG. 1

EP 4 783 303 A1

## Description

## TECHNICAL FIELD

The present application relates to the field of battery technologies, and specifically, to a battery heating method, device and system, a battery pack, a battery module heating control circuit, an energy storage system and a readable medium.

## BACKGROUND

An inverter paired with a battery is used as an energy storage inverter, while the battery may have a problem of not being effectively utilized under low-temperature conditions. In some regions, a lowest temperature in winter may reach minus 30 degrees Celsius, and at such temperatures, the battery is unable to operate. For example, when there is a load in a user's home that needs to be maintained by discharging of the battery, or when photovoltaic energy paired with the inverter needs to be stored by the battery, the battery cannot realize this under low-temperature conditions.

## SUMMARY

A battery heating method, apparatus and system, and a battery pack according to embodiments of the present application may at least heat a battery in real time to ensure a normal operation of the battery.

According to a first aspect of the present application, a battery heating method is provided. The battery heating method is applied to a first controller of an inverter, a battery is arranged in a battery pack, and a heating apparatus is arranged in the battery pack. The battery heating method includes: receiving a battery heating request sent by a second controller of the battery, where the battery heating request is generated by the second controller when it is determined that the battery needs to perform a heating operation based on an acquired cell temperature of the battery and the battery fails to meet a self-heating condition; in response to the battery heating request, acquiring at least one piece of energy information and management information of an energy supply end of the inverter; generating a heating permission instruction if the at least one piece of the energy information and the management information meets a preset heating condition; sending the heating permission instruction to the second controller of the battery, so that the second controller establishes an electrical connection between the heating apparatus and an output end of the inverter; and controlling the inverter to use the energy supply end to supply power to the heating apparatus to heat the battery.

According to a second aspect of the present application, a battery heating method is further provided. The battery heating method is applied to a second controller of a battery, the battery and the second controller are arranged in a battery pack, and a heating apparatus is arranged in the battery pack. The battery heating method includes: acquiring a cell temperature of the battery; generating a battery heating request when it is determined that the cell temperature of the battery is less than a second temperature threshold and the battery fails to meet a self-heating condition; sending the battery heating request to a first controller of an inverter; receiving a heating permission instruction sent by the first controller; and establishing an electrical connection between the heating apparatus and an output end of the inverter according to the heating permission instruction, so that the first controller controls the inverter to use an energy supply end to supply power to the heating apparatus to heat the battery, where the heating permission instruction is generated by the first controller when at least one piece of energy information and management information meets a preset heating condition.

According to a third aspect of the present application, a battery heating apparatus is further provided, which includes a first converter, a second converter, an inverter, a relay, and a first controller. A first port of the first converter is electrically connected to a photovoltaic panel, a second port of the first converter is electrically connected to a first port of the inverter, a second port of the inverter is electrically connected to a power grid through the relay, the first port of the inverter is electrically connected to a second port of the second converter, and a first port of the second converter is electrically connected to a battery; and the first controller is configured to perform the battery heating method according to the first aspect.

According to a fourth aspect of the present application, a battery pack is further provided, which includes a battery, a heating apparatus, a first switch group, a second switch group, a relay, and a second controller of the battery. The heating apparatus is electrically connected to the battery through the first switch group, and the heating apparatus is electrically connected to an interface of the battery pack through the second switch group and the relay; and the second controller is configured to perform the battery heating method according to the second aspect.

According to a fifth aspect of the present application, a battery heating system is further provided, which includes the battery heating apparatus according to the third aspect and the battery pack according to the fourth aspect. The first controller is communicatively connected to the second controller.

According to a sixth aspect of the present application, a non-transitory computer-readable storage medium storing a computer instruction is further provided. The computer instruction is configured to cause a computer to execute steps of the battery heating method according to the first and second aspects.

According to a seventh aspect of the present application, a battery module heating control circuit is further provided, which includes: a first external port, a second external port, a third external port, a fourth external port, a heating apparatus, a first switch group, a second switch group, a first temperature sampling circuit, a second temperature sampling circuit, and a controller. The controller is electrically connected to the second temperature sampling circuit and the first temperature sampling circuit respectively, so as to use the second temperature sampling circuit to collect a temperature value of the battery module, and to use the first temperature sampling circuit to collect a temperature value of the heating apparatus; and the controller is electrically connected to the first switch group and the second switch group respectively, the first switch group is electrically connected to the heating apparatus, the third external port, and the first external port respectively, and the second switch group is electrically connected to the heating apparatus, the fourth external port, and the second external port respectively, so as to use the first switch group and the second switch group to control a power-on state between the first external port and the heating apparatus, and between the second external port and the heating apparatus, and to control a power-on state between the third external port and the heating apparatus, and between the fourth external port and the heating apparatus.

According to an eighth aspect of the present application, a battery pack is further provided, which includes a battery module and the battery module heating control circuit according to the seventh aspect. The battery module heating control circuit is electrically connected to the battery module through the third external port and the fourth external port.

According to a ninth aspect of the present application, an energy storage system is further provided, which includes an energy storage inverter and the battery pack according to the eighth aspect. The energy storage inverter is electrically connected to the battery pack through the first external port and the second external port.

Beneficial effects of embodiments of the present application are as follows.

The battery heating method according to the first aspect of the present application is applied to the first controller of the inverter, the battery is arranged in the battery pack, and the heating apparatus is arranged in the battery pack. The battery heating method includes: when the battery heating request is received, acquiring the energy information and/or the management information of the energy supply end of the inverter; if the energy information and/or the management information meets the preset heating condition, generating the heating permission instruction, and sending the heating permission instruction to the second controller of the battery, so that the second controller establishes the electrical connection between the heating apparatus and the output end of the inverter, and sends the heating preparation completion signal to the first controller; and when the heating preparation completion signal is received, controlling the inverter to use the energy supply end to supply power to the heating apparatus to heat the battery. The embodiments of the present application may heat the battery in real time, thereby preventing the battery from operating under low-temperature conditions, ensuring charging and discharging requirements of the battery, saving photovoltaic energy, and extending a service life of the battery.

**BRIEF DESCRIPTION OF THE DRAWINGS**

To more clearly illustrate embodiments of the present application or technical solutions in the prior art, a brief introduction is given below to the drawings required for describing the embodiments or the prior art. Obviously, the drawings in the following description are only some embodiments of the present application. For those of ordinary skill in the art, other embodiments may also be obtained from these drawings without creative effort.

FIG. 1 is a first flowchart of a battery heating method according to embodiments of the present application.
FIG. 2 is a second flowchart of a battery heating method according to embodiments of the present application.
FIG. 3 is a flowchart of a PCS battery heating function according to embodiments of the present application.
FIG. 4 is a schematic structural diagram of an electronic device according to embodiments of the present application.
FIG. 5 is a flowchart of a BMS battery heating function according to embodiments of the present application.
FIG. 6 is a schematic wiring diagram of a hybrid energy storage system according to embodiments of the present application.
FIG. 7 is a schematic diagram of an internal circuit of a battery pack according to embodiments of the present application.
FIG. 8 is a schematic diagram of an internal circuit of a PCS according to embodiments of the present application.
FIG. 9 is a circuit diagram of a DC/DC converter in a PCS according to embodiments of the present application.
FIG. 10 is a block diagram of battery heating voltage control according to embodiments of the present application.
FIG. 11 is a schematic diagram of an internal circuit of another battery pack according to embodiments of the present application.
FIG. 12 is a schematic structural diagram of a battery module heating control circuit disclosed in the present application.
FIG. 13 is a diagram of a heating control circuit disclosed in the present application.

FIG. 14 is a first schematic diagram of an internal structure of a first switch group and a second switch group disclosed in the present application.

FIG. 15 is a second schematic diagram of an internal structure of a first switch group and a second switch group disclosed in the present application.

FIG. 16 is a schematic diagram of an arrangement manner of an NTC thermistor in a battery module disclosed in the present application.

## DETAILED DESCRIPTION OF THE EMBODIMENTS

The embodiments of the present application are described in more detail below with reference to the drawings. Although certain embodiments of the present application are shown in the drawings, it should be understood that the present application may be implemented in various forms and should not be construed as limited to the embodiments set forth herein. Rather, these embodiments are provided to provide a more thorough and complete understanding of the present application. It should be understood that the drawings and embodiments of the present application are for illustrative purposes only and are not intended to limit the scope of protection of the present application.

As mentioned in the background, in some regions, a lowest temperature in winter may reach minus 30 degrees Celsius, and at such temperatures, a battery is unable to operate.

Therefore, to heat the battery in real-time and ensure a normal operation of the battery, the present application provides a battery heating method, apparatus and system, and a battery pack. In the battery heating method, the battery is heated, thereby enabling the battery to satisfy ideal operating conditions under low-temperature conditions, meet charging and discharging requirements, and save photovoltaic energy by; and a battery heating technology is adopted, thereby avoiding forced discharge of the battery under low-temperature conditions and a reduction in service life.

It should be understood that the battery heating method in the embodiments of the present application may also be applied to a battery module. The following embodiments are merely illustrated by taking the battery or battery module as an example.

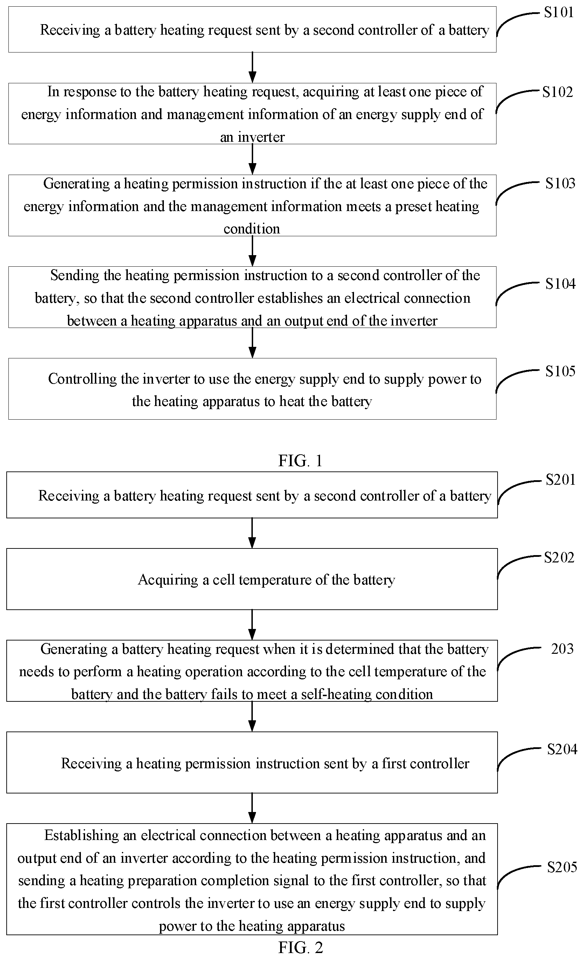

In the embodiments of the present application, a battery heating method is provided. The battery heating method is applied to a first controller of an inverter, a battery is provided inside a battery pack, and a heating apparatus is also arranged in the battery pack. FIG. 1 is a first flowchart of a battery heating method according to embodiments of the present application. The method steps shown in FIG. 1 are described below.

Step S101: receiving a battery heating request sent by a second controller of the battery, where the battery heating request is generated by the second controller when it is determined that the battery needs to perform a heating operation based on an acquired cell temperature of the battery and the battery fails to meet a self-heating condition.

Step S102: in response to the battery heating request, acquiring at least one piece of energy information and management information of an energy supply end of the inverter.

In this step, the energy supply end is an apparatus that can be configured to provide energy for the inverter. For example, the energy supply end may be a power grid or an apparatus capable of providing energy such as wind or solar energy. A specific type of the energy supply end adopted may be set according to actual needs, which is not specifically limited in the embodiments of the present application. The energy information may be configured to describe energy-related information such as energy intensity and energy state of the energy supply end. The management information may be configured to describe management requirements of the user, for example, including but not limited to: time when the user needs to use energy, user requirements for energy intensity, energy type, and the like. The inverter may be configured to convert the energy provided by the energy supply end into alternating current. For example, direct current provided by the energy supply end is converted into alternating current.

In this step, a controller configured to control the inverter is designated as the first controller, and the first controller may be communicatively connected to the inverter. A controller configured to control the battery is designated as the second controller, the second controller may be arranged in the battery pack, and the heating apparatus is also arranged in the battery pack. The heating apparatus may be a heating plate, a heating wire, or the like. The first controller and the second controller are communicatively connected. The second controller sends the battery heating request to the first controller, and the battery heating request is configured to request the inverter to heat the battery.

Step S103: generating a heating permission instruction if the at least one piece of the energy information and the management information meets a preset heating condition.

Step S104: sending the heating permission instruction to the second controller of the battery, so that the second controller establishes an electrical connection between the heating apparatus and an output end of the inverter, and sends a heating preparation completion signal to the first controller.

When receiving the battery heating request, the first controller generates the heating permission instruction if the energy information and the management information meet the preset heating condition, and sends the heating permission instruction to the second controller of the battery, so that the second controller controls the battery to establish the electrical connection between the heating apparatus and the output end of the inverter. The preset heating condition may be configured to limit the energy information and/or the management information, so as to generate the heating permission instruction when user requirements are met and/or the energy supply end has sufficient energy. After that, this instruction is sent to the second controller, so that the second controller may perform heating preparation based on this instruction after receiving the heating permission instruction, and send the heating preparation completion signal to the first controller after completing the heating preparation. When receiving the heating preparation completion signal, the first controller controls the inverter to use the energy supply end to supply power to the heating apparatus, so as to heat the battery.

It should be understood that a process of the second controller sending the heating preparation completion signal to the first controller is optional. The first controller may also control the inverter to use the energy supply end to supply power to the heating apparatus directly or after a preset time after sending the heating permission instruction to the controller.

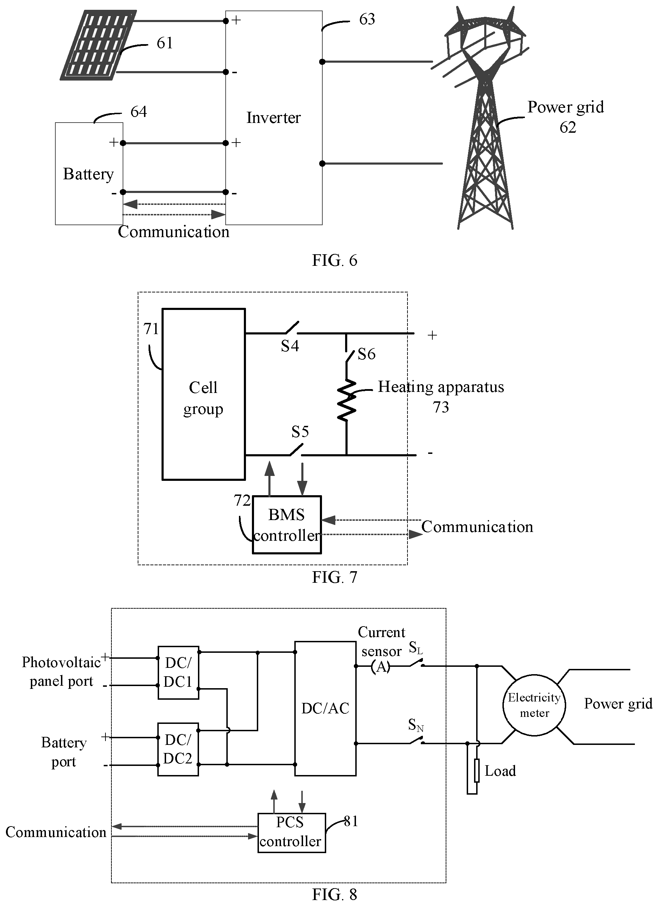

It should be noted that the second controller performs the heating preparation, that is, the second controller establishes the electrical connection between the heating apparatus and the output end of the inverter. Referring to a schematic diagram of an internal circuit of a battery pack shown in FIG. 7, an interior of the battery pack may include a cell group 71, a second controller 72 (shown as a BMS controller 72 in the figure), a first switch S4, a second switch S5, a third switch S6, and a heating apparatus 73. When performing the heating preparation, the second controller 72 may control the first switch S4 and the second switch S5 to open and the third switch S6 to close, so that positive and negative terminals of the battery pack are connected to the output end of the inverter, so as to enable the inverter to use the energy supply end to heat the heating apparatus 73.

It should be noted that the battery in the embodiments of the present application may be a lithium battery, a sodium battery, or other batteries that are easily affected by excessively low temperatures and thus cannot be normally used.

In this step, acquiring the energy information and the management information of the energy supply end of the inverter may provide supporting data for a subsequent battery heating control process. Determining whether heating is allowed based on the energy information, the management information, and the preset heating condition ensures normal and continuous progress of a heating process, and prevents occurrences of situations such as interruption of heating due to insufficient energy supply from the energy supply end, or heating when the user does not require it, thereby ensuring continuity and effectiveness of heating.

Step S105: when the heating preparation completion signal is received, controlling the inverter to use the energy supply end to supply power to the heating apparatus to heat the battery.

In this step, when the heating preparation completion signal is received, the inverter is controlled to use energy provided by the energy supply end to supply power to the heating apparatus, thereby increasing a temperature of the heating apparatus. The heating apparatus is arranged in the battery pack, thereby achieving heating of the battery.

The embodiments of the present application provide the battery heating method. The battery heating method is applied to the first controller of the inverter. The battery is arranged in the battery pack, and the heating apparatus is also arranged in the battery pack. The battery heating method includes: when the battery heating request is received, acquiring the energy information and the management information of the energy supply end of the inverter; if the energy information and the management information meet the preset heating condition, generating the heating permission instruction, and sending the heating permission instruction to the second controller of the battery, so that the second controller establishes the electrical connection between the heating apparatus and the output end of the inverter, and sends the heating preparation completion signal to the first controller; and when the heating preparation completion signal is received, controlling the inverter to use the energy supply end to supply power to the heating apparatus to heat the battery. The embodiments of the present application may heat the battery in real time, thereby preventing the battery from operating under low-temperature conditions, ensuring charging and discharging requirements of the battery, saving photovoltaic energy, and extending a service life of the battery.

In a possible implementation, when the inverter is in a grid-connected mode, the energy supply end includes a photovoltaic panel and a power grid. The acquiring the management information of the energy supply end of the inverter may be performed according to the following steps: acquiring grid-connected power information of the photovoltaic panel and the power grid, battery alternating current power conversion efficiency information, and battery heating power information, and taking the grid-connected power information, the battery alternating current power conversion efficiency information, and the battery heating power information as the management information. The determining whether the energy information and the management information meet the preset heating condition may be performed according to the following steps: if a product of the grid-connected power information and the battery alternating current power conversion efficiency information is greater than the battery heating power information, determining the energy information and the management information meet the preset heating condition. The controlling the inverter to use the energy supply end to supply power to the heating apparatus may be performed according to the following steps: controlling the inverter to use the photovoltaic panel to supply power to the heating apparatus.

In this possible implementation, the grid-connected mode refers to connecting a distributed energy system (such as a solar photovoltaic system, or a wind power generation system) to the power grid, so as to enable the distributed energy system to inject the generated electrical energy into the power grid. In the grid-connected mode, the distributed energy system may supply power to the power grid and may also acquire electrical energy from the power grid. In this mode, bidirectional flow of electrical energy may be realized between the distributed energy system and the power grid, so as to meet load demand of the power grid and balance energy supply.

In this possible implementation, the photovoltaic panel, also known as a solar battery panel or a solar photovoltaic panel, is a device that can convert sunlight into electrical energy. It consists of a plurality of solar batteries that convert light energy in sunlight into electrical energy through photovoltaic effect. The power grid refers to a power system composed of transmission lines, substations, distribution stations, or the like, which is used to transmit and distribute electrical energy generated by power plants to various users.

The grid-connected power information of the photovoltaic panel and the power grid, the battery alternating current power conversion efficiency information, and the battery heating power information are acquired, and the grid-connected power information, the battery alternating current power conversion efficiency information, and the battery heating power information are taken as the management information. The grid-connected power information of the photovoltaic panel and the power grid may be obtained by the inverter through an electricity meter at a grid-connected side. The battery alternating current power conversion efficiency information is configured to characterize a conversion efficiency of converting alternating current power to battery power, and a value of battery alternating current power conversion efficiency may be set according to actual needs. The battery heating power information may be obtained from the second controller by communication between the first controller and the second controller.

In this possible implementation, in the grid-connected mode, if the product of the grid-connected power information and the battery alternating current power conversion efficiency information is greater than the battery heating power information, it indicates that output power of the current photovoltaic panel is converted to alternating current power. In addition to supplying local loads, excess grid-connected power may meet power loss of battery heating. This means that enabling a battery heating function at this time only consumes energy of the photovoltaic panel, and the user does not need to spend extra electricity costs to purchase electricity for battery heating. At this time, the heating condition is met. When the product of the grid-connected power information and the battery alternating current power conversion efficiency information is greater than the battery heating power information, the inverter is controlled to use the photovoltaic panel to supply power to the heating apparatus.

In a possible implementation, when the inverter is in a grid-connected mode, the energy supply end includes a power grid. The acquiring the management information of the energy supply end of the inverter may be performed according to the following steps: acquiring power supply management information of the power grid, and taking the power supply management information as the management information. The determining whether the energy information and the management information meet the preset heating condition may be performed according to the following steps: determining a target heating time period according to the battery heating request, and determining a power supply time period and heating indication information according to the power supply management information; and if the target heating period is within the power supply time period and the heating indication information indicates permission of heating, determining that the energy information and the management information meet the preset heating condition. The controlling the inverter to use the energy supply end to supply power to the heating apparatus may be performed according to the following steps: controlling the inverter to use the power grid to supply power to the heating apparatus.

In this possible implementation, the power grid refers to a power system composed of transmission lines, substations, distribution stations, and the like, which is used to transmit and distribute electrical energy generated by power plants to various users.

The power supply management information of the power grid is acquired, and the power supply management information is taken as the management information. The power supply management information includes a heating time period set by the user and indication information indicating whether to draw electricity from the power grid to heat the battery during this heating time period. It should be noted that other types of the management information may also be set according to actual needs, which is not specifically limited in the embodiments of the present application.

In this possible implementation, the heating indication information is configured to indicate whether the user permits or does not permit drawing electricity from the power grid to heat the battery. In the grid-connected mode, during the heating time period set by the user, drawing electricity from the utility grid to heat the battery is permitted. At this time, the heating condition is met, i.e., determining the target heating time period according to the battery heating request, and determining the power supply time period and the heating indication information according to the power supply management information; if the target heating time period is within the power supply time period and the heating indication information indicates permission of heating, determining that the energy information and the management information meet the preset heating condition; and when the target heating time period is within the power supply time period and the heating indication information indicates permission of heating, controlling the inverter to use the power grid to supply power to the heating apparatus.

In a possible implementation, when the inverter is in an off-grid mode, the energy supply end includes a photovoltaic panel. The acquiring the energy information of the energy supply end of the inverter may be performed according to the following steps: acquiring a voltage value of the photovoltaic panel, and taking the voltage value of the photovoltaic panel as the energy information. The determining whether the energy information and the management information meet the preset heating condition may be performed according to the following steps: determining that the energy information and the management information meet the preset heating condition if the voltage value of the photovoltaic panel is greater than a preset voltage threshold. The controlling the inverter to use the energy supply end to supply power to the heating apparatus may be performed according to the following steps: controlling the inverter to use the photovoltaic panel to supply power to the heating apparatus.

In this possible implementation, the photovoltaic panel, also known as a solar battery panel or a solar photovoltaic panel, is a device that can convert sunlight into electrical energy. It consists of a plurality of solar batteries that convert light energy in sunlight into electrical energy through photovoltaic effect.

In this possible implementation, the off-grid mode refers to disconnecting a distributed energy system from the power grid, so as to enable the distributed energy system to operate independently without relying on the power grid for power supply. In the off-grid mode, the distributed energy system stores electrical energy through its own energy storage apparatus (such as a battery or a super capacitor) and supplies power when needed. In this mode, the distributed energy system does not interact with the power grid and may operate independently.

The voltage value of the photovoltaic panel is acquired in real time, and the voltage value of the photovoltaic panel is taken as the energy information, so as to determine whether the photovoltaic panel can provide energy for battery heating.

In this possible implementation, when the inverter is in the off-grid mode, if photovoltaic energy is detected, the battery heating condition is met. That is, if the voltage value of the photovoltaic panel is greater than the preset voltage threshold, it is determined that the energy information and the management information meet the preset heating condition. The preset voltage threshold may be determined based on specifications. For example, the voltage threshold may be set to 200V.

When the voltage value of the photovoltaic panel is greater than the voltage threshold, the energy information and the management information may be determined to meet the preset heating condition based on the energy information. At this time, the inverter is controlled to use the photovoltaic panel to supply power to the heating apparatus. It should be noted that after a battery heating operation is initiated, the voltage value of the photovoltaic panel may decrease. If the voltage value of the photovoltaic panel drops below the voltage threshold, the battery heating is stopped. After a certain interval, whether the preset heating condition is met is re-determined.

In a possible implementation, the controlling the inverter to supply power to the heating apparatus may be performed according to the following steps: acquiring a resistance value of the heating apparatus and a target battery heating power value; calculating a target voltage value based on the resistance value and the target battery heating power value; and controlling the inverter to use the energy supply end to supply power to the heating apparatus according to the target voltage value.

In this possible implementation, the target battery heating power value may be a minimum heating power value of the battery. The calculating the target voltage value based on the resistance value and the target battery heating power value may be performed using the following formula: $U1 = \sqrt{P1 \times R}$, where U1 represents the target voltage value, P1 represents the target battery heating power value, and R represents the resistance value. The first controller controls an output voltage to a constant voltage U1 to supply power to the heating apparatus, thereby ensuring stability of heating.

In a possible implementation, the following steps may also be performed: when a self-heating request is received, disconnecting the electrical connection between the output end of the inverter and the heating apparatus, and sending a self-heating permission instruction to the second controller.

In this possible implementation, the self-heating request is configured to request using the battery as a power source to heat the heating apparatus. When the self-heating request is received, the electrical connection between the output end of the inverter and the heating apparatus is disconnected, thereby enabling the heating apparatus to connect to the battery. The self-heating permission instruction is sent to the second controller, so that after receiving the self-heating permission instruction, the second controller establishes an electrical connection between the battery and the heating apparatus according to the self-heating permission instruction, and controls the battery to supply power to the heating apparatus to heat the battery.

In a possible implementation, the battery heating request is generated by the second controller when a cell temperature of the battery is less than a second temperature threshold; and the second controller is also used to generate the self-heating request when the cell temperature is less than a first temperature threshold and greater than the second temperature threshold.

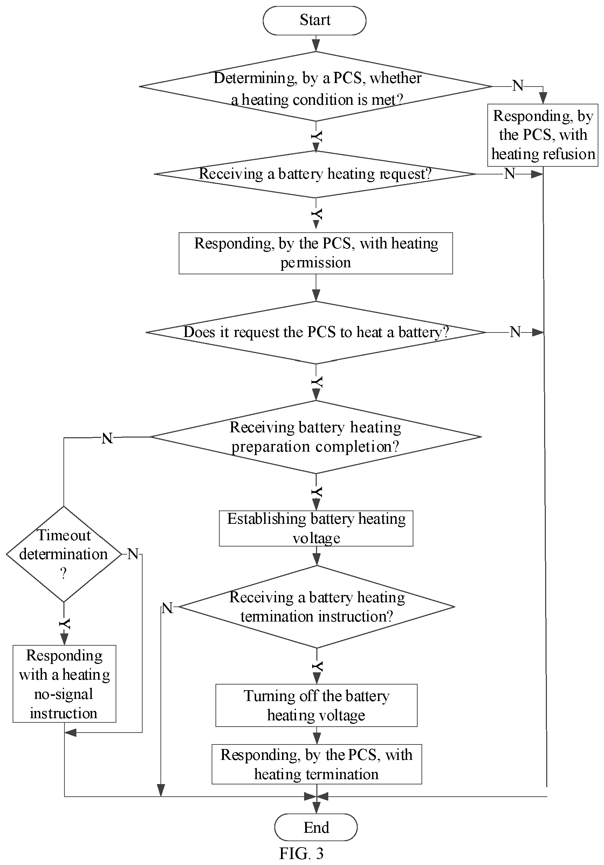

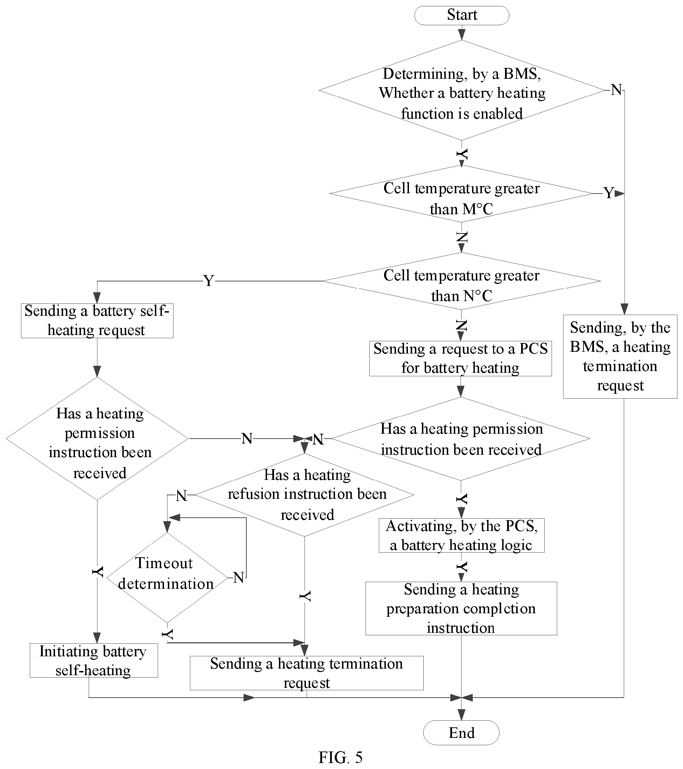

Referring to a flowchart of a Power Conversion System (PCS) battery heating function shown in FIG. 3 and a flowchart of a Battery Management System (BMS) battery heating function shown in FIG. 5, the following describes control steps for battery heating using a specific example. It should be noted that in FIG. 8, a PCS controller 81 is an implementation of the first controller, and in FIG. 7, a BMS controller 72 is an implementation of the second controller.

First, a battery pack may include a battery, a BMS management system, a heating apparatus, and an insulation apparatus. The BMS management system of the battery collects a cell temperature of the battery in real time and communicates with a controller of an inverter. When it is detected that the cell temperature of the battery is too low, the BMS management system first determines whether the battery itself meets a battery heating condition. If the battery meets a self-heating condition, referring to FIG. 7, the BMS management system controls to close a first switch S4, a second switch S5, and a third switch S6 shown in FIG. 7, and the battery heats the heating apparatus 73. If the BMS management system determines that the battery does not meet the self-heating condition, the BMS management system controls to open the first switch S4 and the second switch S5 and close the third switch S6, and sends a battery heating request to the inverter to request the inverter to heat the heating apparatus 73.

A process of heating the battery by the inverter includes the following steps.

Firstly, as shown in FIG. 8, the inverter may obtain grid-connected power information through an electricity meter at a grid-connected side, and the grid-connected power information is recorded as Pac.

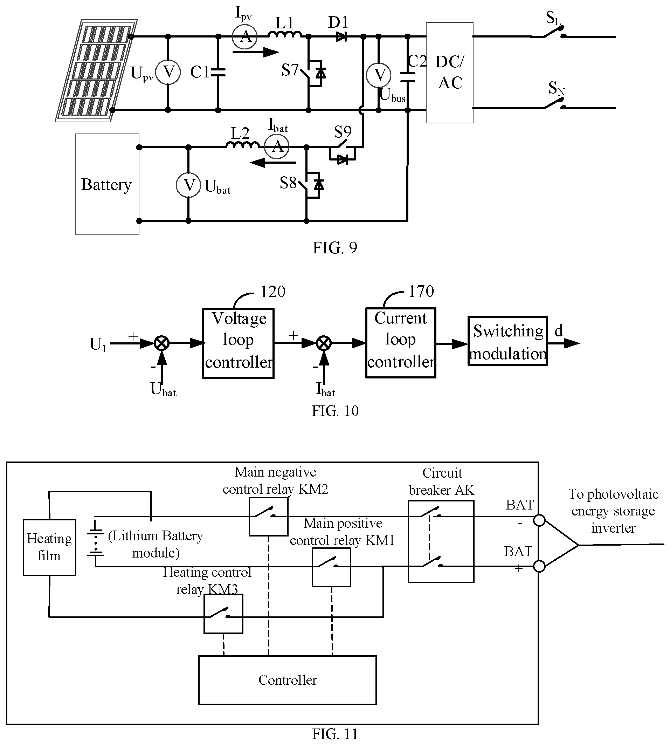

Secondly, as shown in FIG. 9, the inverter may obtain a photovoltaic panel voltage Upv and a battery voltage Ubat through voltage sampling, and obtain a photovoltaic panel current Ipv and a battery current Ibat through current sampling, thereby obtaining panel output power Ppv and battery power Pbat.

Thirdly, as shown in FIG. 6, a PCS controller chip inside the inverter may establish a communication connection with a BMS controller chip inside the battery through communication, thereby obtaining a minimum heating power of the battery, that is, a target battery heating power value P1.

Fourthly, a conversion efficiency of alternating current (AC) power to battery power is set, thereby obtaining battery alternating current power conversion efficiency information, which is denoted as $\mu$.

Fifthly, the inverter provides the user with an enablement setting for a battery heating function and a setting for a time period allowed to purchase electricity from the utility grid to heat the battery.

Sixthly, determination of a heating condition is performed when the user enables heating.

Seventhly, in a grid-connected mode, when electricity meter power Pac $\times$ $\mu$ > P1, it indicates that the current photovoltaic panel output power Ppv is converted to alternating current power through a DC/DC1 converter and a DC/AC converter. In addition to supplying local loads, excess grid-connected power Pac may meet for power loss of battery heating. This means that enabling the battery heating function at this time only consumes energy of the photovoltaic panel, and the user does not need to spend extra electricity costs to purchase electricity for battery heating. At this time, the heating condition is met.

Eighthly, in the grid-connected mode, during a heating time period set by the user, it is permitted to draw electricity from the utility grid to heat the battery. At this time, the heating condition is met.

Ninthly, in an off-grid mode, if photovoltaic energy is detected, the battery heating condition is met.

Tenthly, FIG. 3 is a flowchart of a PCS battery heating function and FIG. 5 is a flowchart of BMS battery heating. According to the flowcharts, a communication connection between the PCS controller inside the inverter and the BMS controller inside the battery is established through a communication line to complete data interaction for the battery heating function.

Eleventhly, the PCS controller determines whether the battery heating condition is met. Then, through interactive instruction information, the BMS controller completes preparation for battery heating, and connects the heating apparatus to a battery input port of the inverter through a relay.

Twelfth, the PCS controller, through a voltage control loop of the DC/DC2 converter, establishes a constant voltage in a battery port, that is, a target voltage value U1. The voltage U1 is calculated based on a resistance value R of the battery heating apparatus and battery heating power, that is, a target battery heating power value P1. The calculation formula is
$$U1 = \sqrt{P1 \times R}.$$

It should be noted that the steps for the PCS controller to establish the constant voltage U1 in the battery port are as follows. Firstly, a Ubus voltage target value U2 shown in FIG. 9 is calculated, where a calculation formula of the target value is U2 = Uac $\times$ 1.414 + 30, and Uac is a voltage effective value of the utility grid. Then, as shown in FIGS. 8 and 9, when the photovoltaic panel output voltage Upv < U2, the PCS controller controls a switch transistor S7 of the DC/DC1 converter to operate in highfrequency switch mode, and the DC/DC1 converter operates in boost mode, making the Ubus voltage equal to the target value U2; and when Upv > U2, the PCS controller controls the switch transistor S7 of the DC/DC1 converter to turn off, and the DC/DC1 converter operates in bypass mode, making the Ubus voltage equal to the photovoltaic panel output voltage Upv. As shown in the flowchart of the PCS battery heating function in FIG. 3, the PCS controller may be implemented using a DSP chip; and when the PCS controller starts to establish a battery heating voltage, the PCS controller opens a heating voltage control loop and controls switch transistors S8 and S9 of the DC/DC2 converter to make the battery port voltage Ubat equal to U1. The block diagram of the control loop is shown in FIG. 10. In FIG. 10, there are a voltage loop controller 120 and a current loop controller 170. The voltage loop controller 120 and the current loop controller 170 are controller parts of a control algorithm implemented with code in the DSP chip. Combining FIGS. 9 and 10, switch states of the switch transistors S8 and S9 are as follows: when d = 1, the switch transistor S8 is open, and the switch transistor S9 is closed; and when d = 0, the switch transistor S8 is closed, and the switch transistor S9 is open.

Thirteenth, when an internal temperature of the battery rises to a certain value that may meet charging and discharging capabilities of the battery, the BMS controller inside the battery informs the PCS controller inside the inverter to stop heating through communication, and the heating process ends.

Fourteenth, to prevent the temperature of the battery from dropping again, the internal heating apparatus may be connected to an output voltage end of the battery, thereby switching to self-heating by the battery.

The present application provides a battery heating method, apparatus, and system, and a battery pack. The method may be applied to heat a battery. The battery is arranged in the battery pack, and the heating apparatus and an insulation apparatus are also arranged in the battery pack. The user may set battery heating enablement and a heating time period allowed to draw electricity from the utility grid. The inverter comprehensively determines the battery heating condition by detecting information such as photovoltaic panel energy and user load consumption. The lithium-ion battery and the inverter interact heating steps through BMS communication, and the inverter can implement a battery heating voltage control method.

The present application further provides a battery heating method, applied to a second controller of a battery. The battery and the second controller are arranged in a battery pack, and a heating apparatus is also arranged in the battery pack. FIG. 2 is a second flowchart of a battery heating method according to embodiments of the present application. Steps of the method involved in FIG. 2 are described below.

It should be understood that the battery heating method may also be applied to a battery module arranged in the battery pack, and the battery module may include a plurality of batteries.

Step S201: acquiring a cell temperature of the battery.

Step S202: generating a battery heating request according to the cell temperature, that is, generating the battery heating request when it is determined that the battery needs to perform a heating operation according to the cell temperature of the battery and the battery fails to meet a self-heating condition.

In this step, a controller configured to control an inverter is taken as a first controller, and the first controller may be communicatively connected to the inverter. A controller configured to control the battery is taken as the second controller, the second controller may be arranged in the battery pack, and the heating apparatus may also be arranged in the battery pack. The heating apparatus may be an electric heating plate or an electric heating wire. The first controller and the second controller are communicatively connected. The second controller may monitor the cell temperature of the battery in real time and generate the battery heating request when the cell temperature reaches a preset temperature threshold. In this step, the battery heating request is configured to request the inverter to heat the battery.

Step S203: sending the battery heating request to the first controller of the inverter, so that the first controller generates a heating permission instruction when energy information and management information of an energy supply end of the inverter meet a preset heating condition.

In this step, the second controller sends the battery heating request to the first controller, so that the first controller generates the heating permission instruction when the energy information and the management information of the energy supply end of the inverter meet the preset heating condition, and sends the heating permission instruction to the second controller of the battery. The preset heating condition may be configured to limit the energy information and/or the management information, so as to generate the heating permission instruction when user requirements are met and/or the energy supply end has sufficient energy.

It should be noted that the energy supply end is an apparatus that can be configured to provide electrical energy for the inverter. For example, the energy supply end may be a power grid or an apparatus capable of converting energy such as wind or solar energy into electrical energy. A specific type of the energy supply end adopted may be set according to actual needs, which is not specifically limited in the embodiments of the present application. The energy information may be configured to describe energy-related information such as energy intensity and energy state of the energy supply end. The management information may be configured to describe management requirements of the user, for example, including but not limited to: time when the user needs to use energy, user requirements for energy intensity, energy type, and the like. The inverter may be configured to convert the energy provided by the energy supply end into alternating current. For example, direct current provided by the energy supply end is converted into alternating current.

Step S204: receiving a heating permission instruction sent by the first controller.

Step S205: when the heating permission instruction is received, establishing an electrical connection between the heating apparatus and an output end of the inverter according to the heating permission instruction, and sending a heating preparation completion signal to the first controller, so that the first controller controls the inverter to use an energy supply end to supply power to the heating apparatus.

When receiving the heating permission instruction, the second controller may perform heating preparation based on this instruction and send the heating preparation completion signal to the first controller after completing the heating preparation. The second controller performs the heating preparation, that is, the second controller establishes the electrical connection between the heating apparatus and the output end of the inverter. Referring to a schematic diagram of an internal circuit of a battery pack shown in FIG. 7, the battery pack may include a cell group 71, a second controller 72 (shown as a BMS controller 72 in the figure), a first switch S4, a second switch S5, a third switch S6, and a heating apparatus 73. When performing the heating preparation, the second controller 72 may control the first switch S4 and second switch S5 to open and the third switch S6 to close, so that positive and negative terminals of the battery pack are connected to the output end of the inverter, so as to enable the inverter to use the energy supply end to heat the heating apparatus 73.

It should be noted that the battery in the embodiments of the present application may be a lithium battery, a sodium battery, or other batteries that are easily affected by excessively low temperatures and thus cannot be normally used.

The battery heating method provided in the embodiments of the present application is applied to the second controller of the battery. The battery and the second controller are arranged in the battery pack, and the heating apparatus is further provided in the battery pack. The battery heating method includes: acquiring the cell temperature of the battery, and generating the battery heating request according to the cell temperature; sending the battery heating request to the first controller of the inverter, so that the first controller generates the heating permission instruction when the energy information and the management information of the energy supply end of the inverter meet the preset heating condition; and when the heating permission instruction is received, establishing the electrical connection between the heating apparatus and the output end of the inverter, and sending the heating preparation completion signal to the first controller, so that the first controller controls the inverter to use the energy supply end to supply power to the heating apparatus. The embodiments of the present application may heat the battery in real time, thereby preventing the battery from operating under low-temperature conditions, ensuring charging and discharging requirements of the battery, saving photovoltaic energy, and extending a service life of the battery.

In a possible implementation, the generating the battery heating request according to the cell temperature may be performed according to the following steps: generating the battery heating request when the cell temperature is less than a second temperature threshold.

In this step, the second temperature threshold may be determined based on actual needs, which is not specifically limited in the embodiments of the present application. In a possible implementation, for example, the second temperature threshold may be set to any temperature between -5°C and -15°C.

In a possible implementation, the following steps may also be performed: generating a self-heating request when it is determined that the cell temperature is greater than the second temperature threshold and less than a first temperature threshold; sending the self-heating request to the first controller, so that the first controller generates a self-heating permission instruction according to the self-heating request; receiving the self-heating permission instruction; and establishing an electrical connection between the battery and the heating apparatus according to the self-heating instruction, and controlling the battery to supply power to the heating apparatus to heat the battery.

In this step, the first temperature threshold and the second temperature threshold may be set according to actual needs, which are not specifically limited in the embodiments of the present application. The first temperature threshold is greater than the second temperature threshold. For example, the first temperature threshold may be set to any temperature between 0°C and 10°C, and the second temperature threshold may be set to any temperature between -5°C and -15°C.

When the cell temperature is less than the first temperature threshold and greater than the second temperature threshold, the self-heating request is generated, and the self-heating request is sent to the first controller, so that the first controller determines whether to allow self-heating of the battery based on the self-heating request. After the self-heating permission instruction is received from the first controller, self-heating processing is performed, thereby achieving user control over a power source employed by the heating apparatus.

In this step, referring to a diagram of an internal circuit of a battery shown in FIG. 7, the battery may include a cell group 71, a second controller 72 (shown as a BMS controller 72 in the figure), a first switch S4, a second switch S5, a third switch S6, and a heating apparatus 73. When the second controller 72 controls the battery to supply power to the heating apparatus 73, the first switch S4, the second switch S5, and the third switch S6 may be controlled to close, thereby using the battery as the power source to heat the heating apparatus 73.

It should be noted that the method may further include: when the cell temperature is greater than the first temperature threshold, generating, by the second controller, a heating termination request, and sending the heating termination request to the first controller to stop the inverter from heating the heating apparatus.

Based on the battery heating method provided in the embodiments of the present application, the embodiments of the present application further provide a battery heating apparatus, which includes a first converter, a second converter, an inverter, a relay, and a first controller. A first port of the first converter is electrically connected to a photovoltaic panel, a second port of the first converter is electrically connected to a first port of the inverter, a second port of the inverter is electrically connected to a power grid through the relay, the first port of the inverter is electrically connected to a second port of the second converter, and a first port of the second converter is electrically connected to a battery. The first controller is configured to heat the battery according to the following steps. The battery is arranged in a battery pack, and a heating apparatus is also arranged in the battery pack. when a battery heating request is received, acquiring energy information and management information of an energy supply end of the inverter; and generating a heating permission instruction if the energy information and the management information meet a preset heating condition; sending the heating permission instruction to a second controller of the battery, so that the second controller establishes an electrical connection between the heating apparatus and an output end of the inverter, and sends a heating preparation completion signal to the first controller; when the heating preparation completion signal is received, controlling the inverter to use an energy supply end to supply power to the heating apparatus to heat the battery.

It should be noted that in this embodiment, the battery heating apparatus refers to an apparatus corresponding to the battery heating method mentioned above, and does not refer to the heating apparatus in the battery pack.

In the embodiments of the present application, a port refers to a physical connection point on a device or an apparatus, used to connect a cable, a plug, a socket, or the like, to achieve an actual physical connection and data transmission. The port may be an input port, an output port, or a bidirectional port, depending on its function and purpose. Different ports provided on a same device or apparatus are referred to as a first port or a second port to distinguish between the ports. For example, the first converter includes a first port and a second port, and the inverter includes a first port and a second port.

Referring to FIG. 8, a first converter DC/DC1, a second converter DC/DC2, and an inverter DC/AC are shown. A PCS controller 81 in the figure is the first controller, and the relay includes $S_L$ and $S_N$.

FIG. 9 shows a specific structure of DC/DC1 and DC/DC2. DC/DC1 includes a first capacitor C1, a first inductor L1, a seventh switch S7, and a diode D1; and DC/DC2 includes a second capacitor C2, an eighth switch S8, a ninth switch S9, and a second inductor L2.

The embodiments of the present application may heat the battery in real time, thereby preventing the battery from operating under low-temperature conditions, ensuring charging and discharging requirements of the battery, saving photovoltaic energy, and extending a service life of the battery.

The first controller may also be configured to heat the battery according to a plurality of implementations corresponding to the battery heating method applied to the first controller of the inverter.

In a possible implementation, when the inverter is in a grid-connected mode, the energy supply end includes a photovoltaic panel and a power grid. The acquiring the management information of the energy supply end of the inverter includes: acquiring grid-connected power information of the photovoltaic panel and the power grid, battery alternating current power conversion efficiency information, and battery heating power information, and taking the grid-connected power information, the battery alternating current power conversion efficiency information, and the battery heating power information as the management information. The determining whether the energy information and the management information meet the preset heating condition includes: if a product of the grid-connected power information and the battery alternating current power conversion efficiency information is greater than the battery heating power information, determining the energy information and the management information meet the preset heating condition. The controlling the inverter to use the energy supply end to supply power to the heating apparatus includes: controlling the inverter to use the photovoltaic panel to supply power to the heating apparatus.

In a possible implementation, when the inverter is in a grid-connected mode, the energy supply end includes a power grid. The acquiring the management information of the energy supply end of the inverter includes: acquiring power supply management information of the power grid, and taking the power supply management information as the management information. The determining whether the energy information and the management information meet the preset heating condition includes: determining a target heating time period according to the battery heating request, and determining a power supply time period and heating indication information according to the power supply management information; and if the target heating period is within the power supply time period and the heating indication information indicates permission of heating, determining that the energy information and the management information meet the preset heating condition. The controlling the inverter to use the energy supply end to supply power to the heating apparatus includes: controlling the inverter to use the power grid to power the heating apparatus.

In a possible implementation, when the inverter is in an off-grid mode, the energy supply end includes a photovoltaic panel. The acquiring the energy information of the energy supply end of the inverter includes: acquiring a voltage value of the photovoltaic panel, and taking the voltage value of the photovoltaic panel as the energy information. The determining whether the energy information and the management information meet the preset heating condition includes: determining that the energy information and the management information meet the preset heating condition if the voltage value of the photovoltaic panel is greater than a preset voltage threshold. The controlling the inverter to use the energy supply end to supply power to the heating apparatus includes: controlling the inverter to use the photovoltaic panel to supply power to the heating apparatus.

In a possible implementation, the controlling the inverter to use the energy supply end to supply power to the heating apparatus includes: acquiring a resistance value of the heating apparatus and a target battery heating power value; calculating a target voltage value based on the resistance value and the target battery heating power value; and controlling the inverter to use the energy supply end to supply power to the heating apparatus according to the target voltage value.

In a possible implementation, the aforementioned battery heating method further includes: when a self-heating request is received, disconnecting the electrical connection between the heating apparatus and the output end of the inverter, and sending a self-heating permission instruction to the second controller, so that the second controller establishes an electrical connection between the battery and the heating apparatus according to the self-heating instruction; and controlling the battery to supply power to the heating apparatus to heat the battery.

In a possible implementation, the battery heating request is generated by the second controller when the cell temperature is less than a second temperature threshold; and the second controller is also configured to generate the self-heating request when the cell temperature is less than a first temperature threshold and greater than the second temperature threshold.

The present application provides a heating control circuit structure for a battery, which includes: a heating apparatus, a first switch group, a second switch group, and a controller. The controller is connected to the first switch group, and the controller is also connected to the second switch group; the heating apparatus is connected to the first switch group, and the heating apparatus is also connected to the second switch group; and the controller controls the heating apparatus to be electrically connected to the battery (or a battery module) or to an external power source through the first switch group and the second switch group.

Based on the aforementioned battery heating method provided in the embodiments of the present application, the embodiments of this application also provide a battery pack, which includes a battery and a heating control circuit structure. The heating control circuit structure includes a heating apparatus, a first switch group, a second switch group, a relay, and a second controller of the battery. The heating apparatus is electrically connected to the battery through the first switch group, and the heating apparatus is electrically connected to an interface of the battery pack through the second switch group and the relay. The second controller is configured to heat the battery according to the following steps: acquiring a cell temperature of the battery, and generating a battery heating request according to the cell temperature; sending the battery heating request to a first controller of an inverter, so that the first controller generates a heating permission instruction when energy information and management information of an energy supply end of the inverter meet a preset heating condition; when the heating permission instruction is received, establishing an electrical connection between the heating apparatus and an output end of the inverter, and sending a heating preparation completion signal to the first controller, so that the first controller controls the inverter to use the energy supply end to supply power to the heating apparatus.

In the embodiments of the present application, FIG. 7 shows a possible implementation of the battery pack. A first port of the heating apparatus is electrically connected to a first port of the battery through a third switch and a first switch. A second port of the heating apparatus is electrically connected to a second port of the battery through a second switch. The first port of the heating apparatus is electrically connected to a first interface of the battery pack through the third switch and the relay. The second port of the heating apparatus is electrically connected to a second interface of the battery pack through the relay. In FIG. 7, the cell group represents the battery, the first switch S4, the second switch S5, and the third switch S6 form the first switch group, and the third switch S6 forms the second switch group. The relay is not shown in the figure. The '+' and '-' symbols represent the interfaces of the battery pack, which are used for electrical connection with the output end of the inverter.

Referring to FIG. 11, FIG. 11 shows another possible implementation of the battery pack. In FIG. 11, the lithium battery module represents the battery, the heating control relay KM3 and the main positive control relay KM1 form the first switch group, and the main negative control relay KM2 and the main positive control relay KM1 form the second switch group. The circuit breaker AK is connected to the interface of the battery pack. The 'BAT+' and 'BAT-' symbols represent the interfaces of the battery pack.

The embodiments of the present application may heat the battery in real time, thereby preventing the battery from operating under low-temperature conditions, ensuring charging and discharging requirements of the battery, saving photovoltaic energy, and extending a service life of the battery.

The second controller may also be configured to heat the battery according to various implementations corresponding to the battery heating method applied to the second controller of the battery.

In a possible implementation, the generating the battery heating request according to the cell temperature includes: generating the battery heating request when the cell temperature is less than the second temperature threshold.

In a possible implementation, the aforementioned battery heating method further includes: generating a self-heating request when the cell temperature is less than the first temperature threshold and greater than the second temperature threshold; sending the self-heating request to the first controller, so that the first controller generates a self-heating permission instruction according to the self-heating request; receiving the self-heating permission instruction, and establishing an electrical connection between the battery and the heating apparatus according to the self-heating instruction; and controlling the battery to supply power to the heating apparatus to heat the battery.

The embodiments of the present application further provide a battery heating system, which includes the inverter mentioned above and the battery pack mentioned above. The first controller is communicatively connected to the second controller.

In the embodiments of the present application, referring to a schematic wiring diagram of a hybrid energy storage system shown in FIG. 6, FIG. 6 shows a possible wiring scenario for a photovoltaic panel 61, a power grid 62, an inverter 63, and a battery pack 64.

The embodiments of the present application further provide an electronic device, which includes: at least one processor; and a memory communicatively connected to the at least one processor. The memory stores a computer program executable by the at least one processor. The computer program, when executed by the at least one processor, is configured to cause the electronic device to perform the methods of the embodiments of the present application.

The embodiments of the present application further provide a non-transitory machine-readable medium storing a computer program. The computer program, when executed by a processor of a computer, is configured to cause the computer to perform the methods of the embodiments of the present application.

The embodiments of the present application further provide a computer program product, which includes a computer program. The computer program, when executed by a processor of a computer, is configured to cause the computer to perform the methods of the embodiments of the present application.

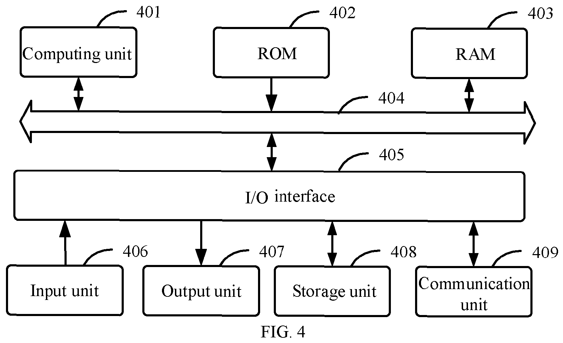

Referring to FIG. 4, a block structural diagram of an electronic device that may serve as a server or client in the embodiments of the present application is now described, which is an example of a hardware device applicable to various aspects of the present application. The electronic device is intended to represent various forms of digital electronic computer devices, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smartphone, a wearable device, and other similar computing apparatuses. The components shown herein, their connections and relationships, and their functions are merely examples and are not intended to limit the implementation of the present application described and/or claimed herein.

As shown in FIG. 4, the electronic device includes a computing unit 401, which may perform various appropriate actions and processes according to a computer program stored in a Read-Only Memory (ROM) 402 or a computer program loaded from a storage unit 408 into a Random Access Memory (RAM) 403. Various programs and data required for an operation of the electronic device may also be stored in the RAM 403. The computing unit 401, the ROM 402, and the RAM 403 are connected to each other via a bus 404. An Input/output (I/O) interface 405 is also connected to the bus 404.

A plurality of components in the electronic device are connected to the I/O interface 405, which includes: an input unit 406, an output unit 407, a storage unit 408, and a communication unit 409. The input unit 406 may be any type of device capable of inputting information to the electronic device. The input unit 406 may receive input digital or character information and generate a key signal input related to user settings and/or functional control of the electronic device. The output unit 407 may be any type of device capable of presenting information and may include, but is not limited to, a display, a speaker, a video/audio output terminal, a vibrator, and/or a printer. The storage unit 408 may include, but is not limited to, a magnetic disk and an optical disk. The communication unit 409 allows the electronic device to exchange information/data with other devices through a computer network such as the Internet and/or various telecommunication networks, and may include, but is not limited to, a modem, a network card, an infrared communication device, a wireless communication transceiver, and/or a chip set, such as a Bluetooth device, a WiFi device, a WiMax device, a cellular communication device, and/or the like.

The computing unit 401 may be various general-purpose and/or special-purpose processing components with processing and computing capabilities. Some examples of the computing unit 401 include, but are not limited to, a CPU, a Graphics Processing Unit (GPU), various dedicated Artificial Intelligence (AI) computing chips, various computing units running machine learning model algorithms, a Digital Signal Processor (DSP), and any appropriate processor, controller, micro controller, etc. The computing unit 401 performs the various methods and processes described above. For example, in some embodiments, the method embodiments of the present application may be implemented as a computer program, which is tangibly embodied in a machine-readable medium, such as the storage unit 408. In some embodiments, part or all of the computer program may be loaded and/or installed onto the electronic device through the ROM 402 and/or the communication unit 409. In some embodiments, the computing unit 401 may be configured to execute the methods mentioned above by any other appropriate manner (for example, by means of firmware).

The computer program for implementing the method of the embodiments of the present application may be written in any combination of one or more programming languages. The computer program may be provided to a processor or controller of a general-purpose computer, a special-purpose computer, or other programmable data processing apparatus, such that the computer program, when executed by the processor or the controller, causes the functions/operations specified in the flowcharts and/or block diagrams to be implemented. The computer program may be executed entirely on a machine, partially on a machine, partly on a machine as an independent software package and partially on a remote machine, or entirely on a remote machine or a server.

In the context of the embodiments of the present application, the machine-readable medium may be a tangible medium that may contain or store a program for use by or in connection with an instruction execution system, apparatus, or device. The machine-readable medium may be a machine-readable signal medium or a machine-readable storage medium. The machine-readable signal medium may include, but is not limited to, an electronic, magnetic, optical, electromagnetic, infrared, or semiconductor system, apparatus or device, or any suitable combination of the foregoing. More specific examples of the machine-readable storage medium may include an electrical connection based on one or more wires, a portable computer disk, a hard disk, a Random Access Memory (RAM), a Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination of the foregoing.

Furthermore, with the development of the battery industry, application scenarios for an energy storage battery are becoming increasingly diverse. In common application scenarios, the energy storage battery is mainly installed outdoors together with a photovoltaic energy storage inverter. However, the energy storage battery usually cannot charge or discharge under low-temperature conditions, which significantly affects its application in cold regions and a utilization rate of photovoltaic energy storage in winter. An existing energy storage battery mainly relies on low-temperature resistance of a cell itself, which has achieved small-current discharge between 0°C and -20°C, but still cannot charge. As a result, when the weather is excessively cold but photovoltaic energy is sufficient, energy storage cannot be achieved, leading to resource waste.

Another purpose of the present application is to provide a battery module heating control circuit, a battery pack, and an energy storage system, which may at least use a battery module or an external power source to supply power to a heating apparatus, thereby improving the ambient temperature of the battery module and ensuring normal use of the battery module. A heating temperature of the battery module heating control circuit is controlled based on a collected temperature value, thereby improving heating safety.

To achieve the above purpose, the present application further provides a battery module heating control circuit, which includes: a heating apparatus, a first switch group, a second switch group, and a controller. The controller is connected to the first switch group, and the controller is also connected to the second switch group; the heating apparatus is connected to the first switch group, and the heating apparatus is also connected to the second switch group; and the controller controls the heating apparatus to be electrically connected to a battery module or to an external power source through the first switch group and the second switch group.

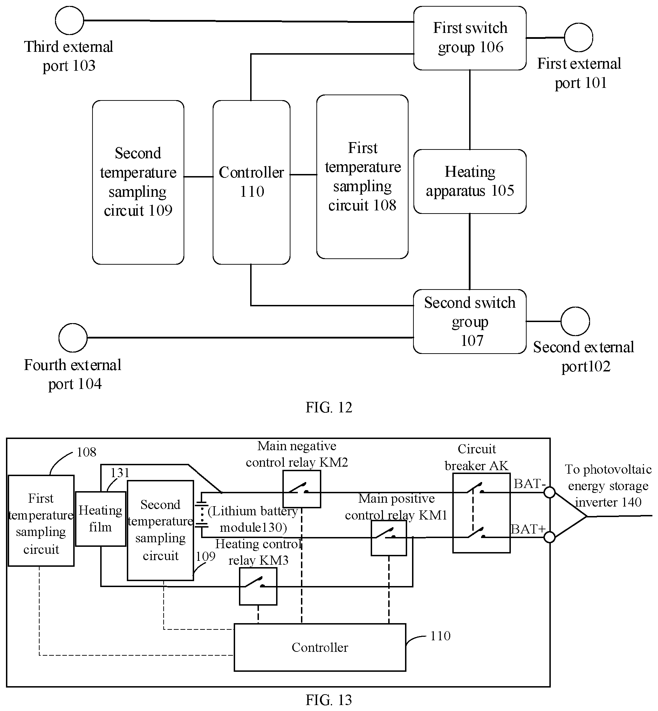

Referring to a schematic structural diagram of a battery module heating control circuit shown in FIG. 12, the battery module heating control circuit is described below.

The battery module heating control circuit includes: a first external port 101, a second external port 102, a third external port 103, a fourth external port 104, a heating apparatus 105, a first switch group 106, a second switch group 107, and a controller 110. The controller 110 is electrically connected to the first switch group 106 and the second switch group 107 respectively; the first switch group 106 is electrically connected to the heating apparatus 105, the third external port 103, and the first external port 101 respectively; and the second switch group 107 is electrically connected to the heating apparatus 105, the fourth external port 104, and the second external port 102 respectively, so as to use the first switch group 106 and the second switch group 107 to control a power-on state between the first external port 101 and the heating apparatus 105, and between the second external port 102 and the heating apparatus 105, as well as to control a power-on state between the third external port 103 and the heating apparatus 105, and between the fourth external port 104 and the heating apparatus 105.

Optionally, as another embodiment, the battery module heating control circuit further includes a first temperature sampling circuit 108 and a second temperature sampling circuit 109, and the controller 110 is also electrically connected to the second temperature sampling circuit and the first temperature sampling circuit respectively, so as to use the second temperature sampling circuit 109 to collect a temperature value of a battery module, and to use the first temperature sampling circuit 108 to collect a temperature value of the heating apparatus 105.

Optionally, as another embodiment, the controller 110 may also perform the battery heating method described in the embodiment of FIG. 2. It should be understood that the controller 110 may be the second controller in the embodiment of FIG. 2.

In the present application, the battery module or an external power source may be used to supply power to the heating apparatus 105, thereby achieving switching of heating power sources; and a heating temperature of the battery module heating control circuit is controlled using a collected temperature value, thereby improving heating safety.

In the embodiments of the present application, models of the first external port 101, the second external port 102, the third external port 103, and the fourth external port 104 may be selected according to actual needs. For example, the first external port 101 and the second external port 102 may be selected with models compatible with the battery module, used for an electrical connection with the battery module to be heated; and the third wiring port 103 and the fourth wiring port 104 may be selected with models compatible with an inverter or other energy storage apparatuses, used for an electrical connection with the inverter or other energy storage apparatuses.

The heating apparatus may adopt a structure such as a heating film, or a heating plate. Preferably, the heating film may be a polyimide PI heating film, a silicone film heating film, or a PTC self-limiting temperature heating film. The heating apparatus may be placed near the battery module to be heated. The controller 110 controls the first switch group 106 and the second switch group 107 to enable a power source connected to the first external port 101 and the second external port 102 to supply power to the heating apparatus 105 or enable a power source connected to the third external port 103 and the fourth external port 104 to supply power to the heating apparatus 105. After the heating apparatus 105 is powered on, the heating apparatus 105 generates heat to supply power to the battery module to be heated. For example, a distance between the heating apparatus 105 and the battery module to be heated may be less than a specified distance value, thereby improving heating efficiency of the heating apparatus 105 on the battery module.

To prevent overheating, the controller 110 is electrically connected to the second temperature sampling circuit 109 and the first temperature sampling circuit 108 respectively, so as to use the second temperature sampling circuit 109 to collect the temperature value of the battery module, and to use the first temperature sampling circuit 108 to collect the temperature value of the heating apparatus 105. The controller 110 generates a control instruction based on the temperature value of the battery module and the temperature value of the heating apparatus 105. The control instruction may control switches of the first switch group 106 and the second switch group 107 to open, thereby stopping heating of the heating apparatus 105, thereby achieving control of the heating temperature and improving heating safety.

The controller 110 is electrically connected to the first switch group 106 and the second switch group 107 respectively. The first switch group 106 is electrically connected to the heating apparatus 105, the third external port 103, and the first external port 101 respectively. The second switch group 107 is electrically connected to the heating apparatus 105, the fourth external port 104, and the second external port 102 respectively. The first switch group 106 may include one or more switches, and the second switch group 107 may include one or more switches. The controller 110 may control state of each switch in the first switch group 106 and the second switch group 107 to be closed or open, thereby using the first switch group 106 and the second switch group 107 to control a power-on state between the first external port 101 and the heating apparatus 105, and between the second external port 102 and the heating apparatus 105, as well as to control a power-on state between the third external port 103 and the heating apparatus 105, and between the fourth external port 104 and the heating apparatus 105. When the power-on state between the first external port 101 and the heating apparatus 105, and between the second external port 102 and the heating apparatus 105 is a conductive state, a power source electrically connected to the first external port 101 and the second external port 102 may be used to supply power to the heating apparatus 105; and when the power-on state between the third external port 103 and the heating apparatus 105, and between the fourth external port 104 and the heating apparatus 105 is a conductive state, a power source electrically connected to the third external port 103 and the fourth external port 104 may be used to supply power to the heating apparatus 105, thereby achieving power supply to the heating apparatus 105 with different power sources and implementing free selection and switching of power supply sources.

In the present application, the battery module heating control circuit includes: the first external port 101, the second external port 102, the third external port 103, the fourth external port 104, the heating apparatus 105, the first switch group 106, the second switch group 107, the first temperature sampling circuit 108, the second temperature sampling circuit 109, and the controller 110. The controller 110 is electrically connected to the second temperature sampling circuit 109 and the first temperature sampling circuit 108 respectively, so as to use the second temperature sampling circuit 109 to collect the temperature value of the battery module, and to use the first temperature sampling circuit 108 to collect the temperature value of the heating apparatus. The controller 110 is electrically connected to the first switch group 106 and the second switch group 107 respectively; the first switch group 106 is electrically connected to the heating apparatus 105, the third external port 103, and the first external port 101 respectively; and the second switch group 107 is electrically connected to the heating apparatus 105, the fourth external port 104, and the second external port 102 respectively, so as to use the first switch group 106 and the second switch group 107 to control the power-on state between the first external port 101 and the heating apparatus 105, and between the second external port 102 and the heating apparatus 105, as well as to control the power-on state between the third external port 103 and the heating apparatus 105, and between the fourth external port 104 and the heating apparatus 105. The controller 110 in the present application may use the first switch group 106 and the second switch group 107 to control the power-on state between the first external port 101 and the heating apparatus 105, and between the second external port 102 and the heating apparatus 105, and to control the power-on state between the third external port 103 and the heating apparatus 105, and between the fourth external port 104 and the heating apparatus 105. The third external port 103 and the fourth external port 104 may be electrically connected to the battery module, and the first external port 101 and the second external port 102 may be electrically connected to other power sources, thereby using the battery module or an external power source to supply power to the heating apparatus 105 and achieving switching of heating power sources. Additionally, the temperature value of the heating apparatus is collected by the first temperature sampling circuit 108, the temperature value of the battery module is collected by the second temperature sampling circuit 109, and the controller 110 uses the collected temperature values to control a heating temperature of the battery module heating control circuit, thereby improving heating safety.

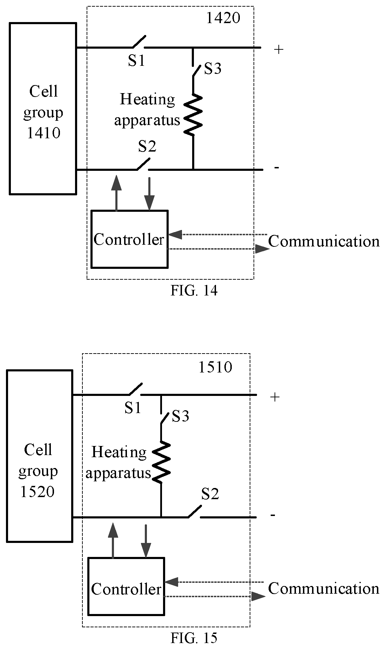

In a possible implementation, as shown in FIGS. 12 and 14, the first switch group 106 includes a first switch S1 and a third switch S3. A first port of the first switch S1 is electrically connected to the third external port 103. A second port of the first switch S1 is electrically connected to the first external port 101 and a first port of the third switch S3 respectively. A second port of the third switch S3 is electrically connected to the heating apparatus 105.

In the embodiments of the present application, referring to a diagram of an internal structure of the first switch group 106 and the second switch group 107 shown in FIG. 14, the first switch group 106 includes the first switch S1 and the third switch S3. The controller 110 may control an operating state of the first switch S1 and the third switch S3, as well as an operating state of the second switch group 107, thereby connecting the heating apparatus 105 to a designated power supply source.

In a possible implementation, the second switch group includes a second switch S2. A first port of the second switch S2 is electrically connected to the fourth external port 104. A second port of the second switch S2 is electrically connected to the second external port 102 and a second port of the heating apparatus 105 respectively.

Referring to FIG. 14, the battery pack includes a heating control circuit 1410 for a battery module and a cell group 1420. In the embodiments of the present application, referring to a first schematic diagram of an internal structure of the first switch group 106 and the second switch group 107 shown in FIG. 14, the second switch group 107 includes the second switch S2. The controller 110 controls an operating state of the first switch S1, the second switch S2, and the third switch S3, thereby connecting the heating apparatus 105 to a designated power supply source.

In a possible implementation, the second switch group 107 includes a second switch S2. A first port of the second switch S2 is electrically connected to the fourth external port 104 and a second port of the heating apparatus 105 respectively. A second port of the second switch S2 is electrically connected to the second external port 102.

Referring to FIG. 15, the battery pack includes a heating control circuit 1510 for a battery module and a cell group 1520. In the embodiments of the present application, referring to a second schematic diagram of an internal structure of the first switch group 106 and the second switch group 107 shown in FIG. 15, the second switch group 107 includes the second switch S2. The controller 110 connects the heating apparatus 105 to a designated power supply source by controlling an operating state of the first switch S1, the second switch S2, and the third switch S3. By placing the second switch S2 between the second end of the heating apparatus 105 and the second external port 102, the first switch S1 and the third switch S3 may be used to control a connection state between the heating apparatus 105 and the cell group (or the battery module), and the third switch S3 and the second switch S2 may be used to control a connection state between the heating apparatus 105 and an external power source. When any power source supplies power, dual control may be achieved through two switches, thereby avoiding a risk of thermal runaway in a cell caused by continuous heating due to switch sticking.

In a possible implementation, the battery module includes a plurality of cells; the heating apparatus includes a plurality of heating films; and a surface of one or more of the cells is provided with one or more of the heating films.

In the embodiments of the present application, the surface of one or more of the cells is provided with one or more of the heating films. By heating the plurality of cells in the battery module with the plurality of heating films, uniform and efficient heating is ensured.

In a possible implementation, the first temperature sampling circuit 108 includes one or more Negative Temperature Coefficient (NTC) thermistors, and the one or more NTC thermistors are arranged on a surface of the heating apparatus 105.

In the embodiments of the present application, the NTC thermistor is a thermistor ceramic component made primarily from transition metal oxides using electronic ceramic processes. Its resistance value decreases as the temperature increases, and by utilizing this characteristic, it may be used as a component for temperature measurement, temperature compensation, and temperature control.

Preferably, the plurality of NTC thermistors may be dispersedly and uniformly arranged on the surface of the heating apparatus 105. For example, a heating temperature sampling component is arranged on the heating film to serve as a reference benchmark for temperature control of the heating film.

In a possible implementation, the second temperature sampling circuit 109 includes one or more NTC thermistors, and the one or more NTC thermistors are arranged between cells of the battery module.

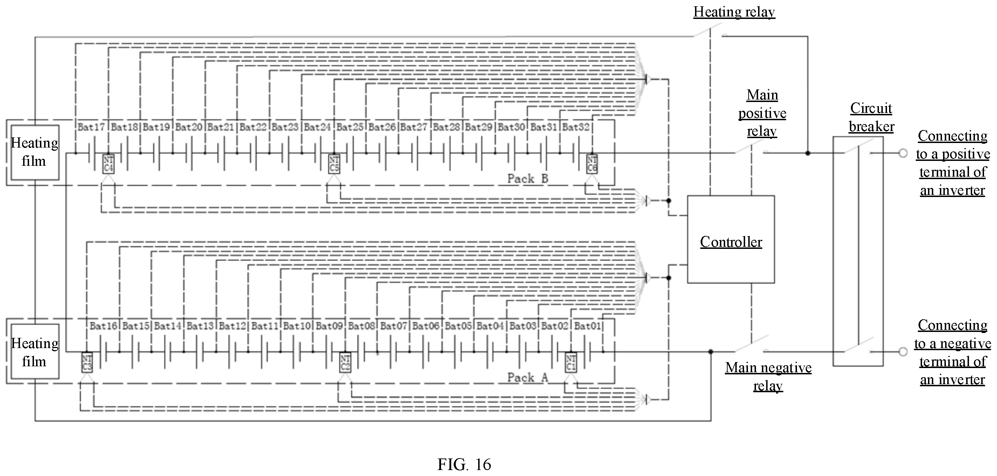

In the embodiments of the present application, the plurality of NTC thermistors may be dispersedly arranged between the cells of the battery module. Referring to a schematic diagram of an arrangement of the NTC thermistors on the battery module shown in FIG. 16, the figure includes a battery pack A (Pack A) and a battery pack B (Pack B). The battery pack A includes a heating film, batteries (Bat01 to Bat16), and NTC thermistors (NTC1 to NTC3). The battery pack B includes a heating film, batteries (Bat17 to Bat32), and NTC thermistors (NTC4 to NTC6). This figure illustrates the arrangement where the NTC thermistors are arranged at intervals of a plurality of batteries. The arrangement of the NTC thermistors is not limited to what is shown in the figure and may be adjusted in terms of quantity and layout based on actual thermal simulation results.

In a possible implementation, the battery module heating control circuit further includes a circuit breaker. The first switch group 106 is electrically connected to the first external port 101 through the circuit breaker, and the second switch group 107 is electrically connected to the second external port 102 through the circuit breaker.

In the embodiments of the present application, the circuit breaker is used to achieve short-circuit protection, thereby ensuring usage safety of the circuit. A model of the circuit breaker may be selected based on actual needs, which is not specifically limited in the present application.

The battery module heating control circuit is described below with specific embodiments. Referring to a diagram of the heating control circuit shown in FIG. 13, during a specific implementation, the battery module heating control circuit may include a circuit breaker AK, a main positive control relay KM1, a main negative control relay KM2, a heating control relay KM3, a controller 110, a heating film 131, a first temperature sampling circuit 108, and a second temperature sampling circuit 109.

In the embodiments of the present application, the battery module heating control circuit includes the circuit breaker AK (for short-circuit protection), the main positive control relay KM1, and the main negative control relay KM2 that are connected in series on a main circuit of a lithium battery, as well as the heating control relay KM3 connected in parallel on a circuit of the lithium battery and the heating film 131 installed on a battery module 130, along with a temperature sampling component (the second temperature sampling circuit 109) for the battery module part and a temperature sampling component (the first temperature sampling circuit 108) for the heating film part on a detection circuit.

In the embodiments of the present application, regarding a heating function of an energy storage lithium battery module, during a design of the lithium battery module 130 within the battery pack, the heating film 131 is attached to a front surface or a side surface of each lithium cell in the module. When receiving energy supply, the heating film 131 generates heat to continuously heat the lithium cell, thereby raising a temperature of the lithium cell above 0°C. A temperature sampling component is also arranged on the lithium battery in the module to achieve temperature sampling of the lithium battery, thereby preventing overheating of the lithium battery caused by self-heating during charging and discharging and continuous heating by the heating film 131.

In the embodiments of the present application, the controller 110 controls closing or opening of the main positive control relay KM1, the main negative control relay KM2, and the heating relay KM3 to respectively provide energy required for heating from either a photovoltaic energy storage inverter 140 or a residential energy storage lithium battery module, thereby achieving dual protection and backup, greatly avoiding occurrence of abnormal situations and improving safety performance. The heating control circuit for the lithium battery module 130 may control a heating process according to the following scenarios.

Firstly, when the photovoltaic energy storage inverter 140 supplies power to control the heating film 131 to heat the residential energy storage lithium battery module, the main negative control relay KM2 and the heating control relay KM3 are closed, so that the heating film 131 uses the power provided by the photovoltaic energy storage inverter 140 to perform a heating operation, thereby heating the lithium battery to a temperature environment suitable for operation.

Preferably, in order to extend a service life of the heating relay KM3, it may be considered to first close the heating control relay KM3 with low load-bearing capacity. At this time, a heating circuit is not formed, so the heating relay KM3 closes without load. Then, the main negative control relay KM2 with high load-bearing capacity is closed. At this time, the heating circuit is formed, and the main negative control relay KM2 closes with load, thereby significantly extending the service life of the heating control relay KM3 with low load-bearing capacity.

Secondly, when the residential energy storage lithium battery module supplies power to control the heating film 131 to heat the lithium battery module 130, the main positive control relay KM1 and the heating control relay KM3 are closed, so that the heating film 131 uses the power provided by the residential energy storage lithium battery module to perform a heating operation, thereby heating the lithium battery to a temperature environment suitable for operation.

Preferably, in order to extend a service life of the heating relay KM3, it may be considered to first close the heating control relay KM3 with low load-bearing capacity. At this time, the heating circuit is not formed, so the heating relay KM3 closes without load. Then, the main positive control relay KM1 with high load-bearing capacity is closed. At this time, the heating circuit is formed, and the main positive control relay KM1 closes with load, thereby significantly extending the service life of the heating control relay KM3 with low load-bearing capacity.

Thirdly, when the photovoltaic energy storage inverter 140 charges the residential energy storage lithium battery module, the photovoltaic energy storage inverter 140 may provide power to control the heating film 131 to heat the lithium battery module 130. The main positive control relay KM1, the main negative control relay KM2, and the heating control relay KM3 are closed. The photovoltaic energy storage inverter 140 provides charging energy for the residential energy storage lithium battery module and energy required for heating the heating film 131, thereby fully utilizing surplus photovoltaic energy, and enabling the heating film 131 to use the power provided by the photovoltaic energy storage inverter 140 to perform a heating operation, thus heating the lithium battery to a temperature environment suitable for operation.

Preferably, in order to extend a service life of the heating relay KM3, it may be considered to first close the heating control relay KM3 with low load-bearing capacity. At this time, a heating circuit is not formed, so the heating relay KM3 closes without load. Then, the main positive control relay KM1 and the main negative control relay KM2 with high load-bearing capacity are closed. At this time, the heating circuit is formed, and the main positive control relay KM1 and the main negative control relay KM2 close with load, thereby significantly extending the service life of the heating control relay KM3 with low load-bearing capacity.

Fourthly, when the photovoltaic energy storage inverter 140 discharges to the residential energy storage lithium battery module, the residential energy storage lithium battery module may provide power to control the heating film 131 to heat the lithium battery module 130. The main positive control relay KM1, the main negative control relay KM2, and the heating control relay KM3 are closed. The residential energy storage lithium battery module provides load-bearing energy for the photovoltaic energy storage inverter 140 and energy required for heating the heating film 131, thereby enabling the lithium battery to quickly raise its own temperature to a temperature environment suitable for operation.

Fifthly, if a temperature value obtained by the temperature sampling component on the lithium battery module 130 is within a temperature range suitable for operation, the main positive control relay KM1, the main negative control relay KM2, and the heating control relay KM3 are actively open, so that a power supply circuit of the heating film 131 is disconnected and an active heating function is stopped.

Preferably, in order to extend a service life of the heating relay KM3, it may be considered to first open the main positive control relay KM1 and the main negative control relay KM2 with high load-bearing capacity. At this time, the main positive control relay KM1 and the main negative control relay KM2 open with load, and the heating circuit is opened with load by the main positive control relay KM1 or the main negative control relay KM2. Then, the heating relay KM3 with low load-bearing capacity is open, thereby greatly extending the service life of the heating control relay KM3 with low load-bearing capacity.

Sixthly, when a temperature value obtained by the temperature sampling component arranged on the heating film 131 exceeds a warning threshold, or a temperature value obtained by the temperature sampling component on the lithium battery module 130 exceeds a warning threshold, the main positive control relay KM1, the main negative control relay KM2, and the heating relay KM3 should be opened in time, so as to avoid abnormal temperature rise that may cause a thermal runaway of the lithium battery module 130, thereby achieving an overheating protection function.

The present application relates to the heating function of the residential energy storage lithium battery module, improving environmental adaptability of the residential energy storage battery module, facilitating installation and use in cold regions, fully utilizing photovoltaic energy in various environments to avoid waste, and ensuring continuous energy supply for residential loads in a low-temperature environment. The present application designs the heating film on the cell module, controlled by a hardware circuit to enable provision of heating energy from heating energy of the residential energy storage inverter or from battery's own power. Heating temperature control is realized based on the temperature sampling arranged on the heating film and the temperature sampling arranged on the cell module, thereby avoiding thermal runaway of the lithium battery caused by continuous overheating. A dual backup of the main positive relay, the main negative relay, and the heating control relay is realized, thereby avoiding thermal runaway of the cell caused by continuous heating due to sticking of the heating control relay. The following effects are achieved: controllable sourcing of power supply energy for the heating film, a dual backup of a control circuit for enhanced safety, and a dual backup of a sampling circuit for enhanced safety.

On the other hand, the embodiments of the present application further provide a battery pack. The battery pack includes a battery module and the battery module heating control circuit mentioned above. The heating control circuit is electrically connected to the battery module through the third external port and the fourth external port. Therefore, the battery pack includes all technical effects of the battery module heating control circuit mentioned above. Since the technical effects of the battery module heating control circuit have been described in detail earlier, they will not be repeated herein.

On the other hand, the embodiments of the present application further provide an energy storage system, which includes an energy storage inverter and the battery pack mentioned above. The energy storage inverter is electrically connected to the battery pack through the first external port and the second external port. The battery pack includes all the technical effects of the battery module heating control circuit mentioned above. Since the technical effects of the battery module heating control circuit have been described in detail earlier, they will not be repeated herein.

It should be noted that the term "including" and its variants used in the embodiments of the present application are open-ended, that is, "including but not limited to". The term "based on" means "at least partially based on". The term "an embodiment" means "at least one embodiment"; the term "another embodiment" means "at least one additional embodiment"; and the term "some embodiments" means "at least some embodiments". The modifiers "a" and "a plurality of" mentioned in the embodiments of the present application are illustrative rather than restrictive. Those skilled in the art should understand that unless otherwise specified in the context, they should be understood as "one or more."

The user information (including but not limited to user device information, user personal information, and the like) and data (including but not limited to data for analysis, stored data, displayed data, and the like) involved in the embodiments of the present application are all authorized by the user or fully authorized by all parties. The collection, use, and processing of related data need comply with relevant laws, regulations, and standards of the relevant countries and regions, and corresponding operation entries are provided for the user to choose to authorize or refuse.

Various steps described in the method implementations provided by the embodiments of the present application may be performed in different orders and/or in parallel. In addition, the method implementations may include additional steps and/or omit the execution of the illustrated steps. The scope of protection of the present application is not limited in this regard.

The term "embodiment" in this specification refers to the specific features, structures, or characteristics described in connection with the embodiment that may be included in at least one embodiment of the present application. The phrase appearing in various locations in the specification does not necessarily mean the same embodiment, nor does it intend to be mutually exclusive, independent of, or alternative to other embodiments. Various embodiments in this specification are described in a related manner, and the same or similar parts between the embodiments are cross-referenced. In particular, as for the device, apparatus, and system embodiments, since they are basically similar to the method embodiments, the description is relatively simple, and relevant parts are referred to in the description of the method embodiments.

For ease of description, the spatial relative terms such as "on", "above", "on the surface", and "upper", may be used herein to describe the spatial positional relationship between one device or feature and other devices or features shown in the figures. It should be understood that the spatial relative terms are intended to encompass different orientations of the device in use or operation in addition to the orientation depicted in the figures. For example, if a device in the figure is inverted, the device described as being "above other devices or structures" or "on other devices or structures" may subsequently be positioned as "below other devices or structures" or "under other devices or structures". Thus, the exemplary term "above" may include both "above" and "below" orientations. The device may also be positioned in other different ways (rotated 90 degrees or in other orientations), and the spatial relative descriptions used herein should be interpreted accordingly.

In addition, it should be noted that the use of the terms such as "first" and "second" to define components is merely for the convenience of distinguishing the corresponding components. Unless otherwise stated, the above terms have no special meaning and therefore should not be construed as limiting the scope of protection of the present application.

The embodiments described above only express several implementations of the present application. The description is relatively specific and detailed, but it should not be construed as limiting the scope of patent protection. It should be pointed out that for those of ordinary skill in the art, without departing from the concept of the present application, several modifications and improvements may also be made, all of which fall within the scope of protection of the present application. Therefore, the scope of protection of the present application shall be subject to the appended claims.

**Claims**

1. A battery heating method, **characterized in that** the battery heating method is applied to a first controller of an inverter, a battery is arranged in a battery pack, and a heating apparatus is arranged in the battery pack; and the battery heating method comprises:

   receiving a battery heating request sent by a second controller of the battery, wherein the battery heating request is generated by the second controller when it is determined that the battery needs to perform a heating operation based on an acquired cell temperature of the battery and the battery fails to meet a self-heating condition;
   in response to the battery heating request, acquiring at least one piece of energy information and management information of an energy supply end of the inverter;

generating a heating permission instruction if the at least one piece of the energy information and the management information meets a preset heating condition;

sending the heating permission instruction to the second controller of the battery, so that the second controller establishes an electrical connection between the heating apparatus and an output end of the inverter; and

controlling the inverter to use the energy supply end to supply power to the heating apparatus to heat the battery.

2. The battery heating method according to claim 1, further comprising:

receiving a self-heating request sent by the second controller, wherein the self-heating request is generated by the second controller when a cell temperature of the battery is greater than a second temperature threshold and less than a first temperature threshold during a process of heating the battery by the inverter; and disconnecting the electrical connection between the output end of the inverter and the heating apparatus, and sending a self-heating permission instruction to the second controller, so that the second controller establishes an electrical connection between the battery and the heating apparatus according to the self-heating permission instruction, and controls the battery to supply power to the heating apparatus to heat the battery.

3. The battery heating method according to claim 1 or 2, wherein when the inverter is in a grid-connected mode, the energy supply end comprises a photovoltaic panel and a power grid;

the acquiring the at least one piece of the energy information and the management information of the energy supply end of the inverter comprises:

acquiring grid-connected power information of the photovoltaic panel and the power grid, battery alternating current power conversion efficiency information, and battery heating power information, and taking the grid-connected power information, the battery alternating current power conversion efficiency information, and the battery heating power information as the management information;

the generating the heating permission instruction if the at least one piece of the energy information and the management information meets the preset heating condition comprises:

if a product of the grid-connected power information and the battery alternating current power conversion efficiency information is greater than the battery heating power information, generating the heating permission instruction; and

the controlling the inverter to use the energy supply end to supply power to the heating apparatus comprises:

controlling the inverter to use the photovoltaic panel to supply power to the heating apparatus.

4. The battery heating method according to any one of claims 1 to 3, wherein when the inverter is in a grid-connected mode, the energy supply end comprises a power grid;

the acquiring the at least one piece of the energy information and the management information of the energy supply end of the inverter comprises:

acquiring power supply management information of the power grid, and taking the power supply management information as the management information;

the generating the heating permission instruction if the at least one piece of the energy information and the management information meets the preset heating condition comprises:

determining a target heating time period according to the battery heating request, and determining a power supply time period and heating indication information according to the power supply management information; and

generating the heating permission instruction if the target heating time period is within the power supply time period and the heating indication information indicates permission of heating; and

the controlling the inverter to use the energy supply end to supply power to the heating apparatus comprises:

controlling the inverter to use the power grid to supply power to the heating apparatus.

5. The method according to any one of claims 1 to 4, wherein when the inverter is in an off-grid mode, the energy supply end comprises a photovoltaic panel;

the acquiring the at least one piece of the energy information and the management information of the energy supply end of the inverter comprises:

acquiring a voltage value of the photovoltaic panel, and taking the voltage value of the photovoltaic panel as the energy information;

the generating the heating permission instruction if the at least one piece of the energy information and the management information meets the preset heating condition comprises:

generating the heating permission instruction if the voltage value of the photovoltaic panel is greater than a preset voltage threshold, and
the controlling the inverter to use the energy supply end to supply power to the heating apparatus comprises:
controlling the inverter to use the photovoltaic panel to supply power to the heating apparatus.

6. The method according to any one of claims 1 to 5, wherein the controlling the inverter to use the energy supply end to supply power to the heating apparatus comprises:

acquiring a resistance value of the heating apparatus and a target battery heating power value;
calculating a target voltage value based on the resistance value and the target battery heating power value; and
controlling the inverter to use the energy supply end to supply power to the heating apparatus according to the target voltage value.

7. The battery heating method according to any one of claims 1 to 6, wherein before the controlling the inverter to use the energy supply end to supply power to the heating apparatus, the battery heating method further comprises:
receiving a heating preparation completion signal sent by the second controller.

8. A battery heating method, **characterized in that** the battery heating method is applied to a second controller of a battery, the battery and the second controller are arranged in a battery pack, and a heating apparatus is arranged in the battery pack; and the battery heating method comprises:

acquiring a cell temperature of the battery;
generating a battery heating request when it is determined that the battery needs to perform a heating operation based on the cell temperature of the battery and the battery fails to meet a self-heating condition;
sending the battery heating request to a first controller of an inverter;
receiving a heating permission instruction sent by the first controller; and
establishing an electrical connection between the heating apparatus and an output end of the inverter according to the heating permission instruction, so that the first controller controls the inverter to use an energy supply end to supply power to the heating apparatus to heat the battery, wherein the heating permission instruction is generated by the first controller when at least one piece of energy information and management information meets a preset heating condition.

9. The method according to claim 8, further comprising:

during a process of heating the battery by the inverter, generating a self-heating request when it is determined that the cell temperature of the battery is greater than a second temperature threshold and less than a first temperature threshold, and sending the self-heating request to the first controller;
receiving a self-heating permission instruction sent by the first controller;
establishing an electrical connection between the battery and the heating apparatus according to the self-heating permission instruction; and
controlling the battery to supply power to the heating apparatus to heat the battery, wherein the self-heating permission instruction is generated after the first controller disconnects the electrical connection between the output end of the inverter and the heating apparatus according to the self-heating request.

10. The battery heating method according to claim 8 or 9, wherein after the establishing the electrical connection between the heating apparatus and the output end of the inverter, the battery heating method further comprises:
sending a heating preparation completion signal to the first controller.

11. A battery heating apparatus, **characterized by** comprising: a first converter, a second converter, an inverter, a relay, and a first controller, wherein a first port of the first converter is electrically connected to a photovoltaic panel, a second port of the first converter is electrically connected to a first port of the inverter, a second port of the inverter is electrically connected to a power grid through the relay, the first port of the inverter is electrically connected to a second port of the second converter, and a first port of the second converter is electrically connected to a battery; and the first controller is configured to perform the battery heating method according to any one of claims 1 to 7.

12. A battery pack, **characterized by** comprising: a battery, a heating apparatus, a first switch group, a second switch group, a relay, and a second controller of the battery, wherein the heating apparatus is electrically connected to the battery through the first switch group, and the heating apparatus is electrically connected to an interface of the battery pack through the second switch group and the relay; and the second controller is configured to perform the battery heating method according to any one of claims 8 to 10.

13. The battery pack according to claim 12, further comprising:

a first external port, a second external port, a third external port, a fourth external port, a first temperature sampling circuit, and a second temperature sampling circuit, wherein the second controller is electrically connected to the second temperature sampling circuit and the first temperature sampling circuit respectively, so as to use the second temperature sampling circuit to collect a temperature value of a battery module, and to use the first temperature sampling circuit to collect a temperature value of the heating apparatus; and the second controller is electrically connected to the first switch group and the second switch group respectively, the first switch group is electrically connected to the heating apparatus, the third external port, and the first external port respectively, and the second switch group is electrically connected to the heating apparatus, the fourth external port, and the second external port respectively, so as to use the first switch group and the second switch group to control a power-on state between the first external port and the heating apparatus, and between the second external port and the heating apparatus, and to control a power-on state between the third external port and the heating apparatus, and between the fourth external port and the heating apparatus.

14. A battery heating system, **characterized by** comprising the battery heating apparatus according to claim 11 and the battery pack according to claim 12 or 13, wherein the first controller is communicatively connected to the second controller.

15. A non-transitory machine-readable medium storing a computer instruction, **characterized in that** the computer instruction is configured to cause a computer to execute the battery heating method according to any one of claims 1 to 10.

16. A battery module heating control circuit, **characterized by** comprising: a first external port, a second external port, a third external port, a fourth external port, a heating apparatus, a first switch group, a second switch group, a first temperature sampling circuit, a second temperature sampling circuit, and a controller,

wherein the controller is electrically connected to the second temperature sampling circuit and the first temperature sampling circuit respectively, so as to use the second temperature sampling circuit to collect a temperature value of the battery module, and to use the first temperature sampling circuit to collect a temperature value of the heating apparatus; and the controller is electrically connected to the first switch group and the second switch group respectively, the first switch group is electrically connected to the heating apparatus, the third external port, and the first external port respectively, and the second switch group is electrically connected to the heating apparatus, the fourth external port, and the second external port respectively, so as to use the first switch group and the second switch group to control a power-on state between the first external port and the heating apparatus, and between the second external port and the heating apparatus, and to control a power-on state between the third external port and the heating apparatus, and between the fourth external port and the heating apparatus.

17. The battery module heating control circuit according to claim 16, wherein the first switch group comprises a first switch and a third switch; and
a first port of the first switch is electrically connected to the third external port, a second port of the first switch is electrically connected to a first port of the third switch and the first external port respectively, and a second port of the third switch is electrically connected to the heating apparatus.

18. The battery module heating control circuit according to claim 17, wherein the second switch group comprises a second switch; and
a first port of the second switch is electrically connected to the fourth external port, and a second port of the second switch is electrically connected to a second port of the heating apparatus and the second external port respectively.

19. The battery module heating control circuit according to claim 17, wherein the second switch group comprises a second switch; and
a first port of the second switch is electrically connected to the fourth external port and a second port of the heating apparatus respectively, and a second port of the second switch is electrically connected to the second external port.

20. The battery module heating control circuit according to claim 16, wherein the battery module comprises a plurality of cells; the heating apparatus comprises a plurality of heating films; and a surface of one or more of the cells is provided with one or more of the heating films.

21. The battery module heating control circuit according to claim 16, wherein the first temperature sampling circuit comprises one or more NTC thermistors, and the one or more NTC thermistors are arranged on a surface of the heating apparatus.

22. The battery module heating control circuit according to claim 16, wherein the second temperature sampling circuit comprises one or more NTC thermistors, and the one or more NTC thermistors are arranged between cells of the battery module.

23. The battery module heating control circuit according to any one of claims 16 to 22, further comprising a circuit breaker, wherein the first switch group is electrically connected to the first external port through the circuit breaker, and the second switch group is electrically connected to the second external port through the circuit breaker.

24. A battery pack, **characterized by** comprising a battery module and the battery module heating control circuit according to any one of claims 16 to 23, wherein the battery module heating control circuit is electrically connected to the battery module through the third external port and the fourth external port.

25. An energy storage system, **characterized by** comprising an energy storage inverter and the battery pack according to claim 24, wherein the energy storage inverter is electrically connected to the battery pack through the first external port and the second external port.

Receiving a battery heating request sent by a second controller of a battery — S101

In response to the battery heating request, acquiring at least one piece of energy information and management information of an energy supply end of an inverter — S102

Generating a heating permission instruction if the at least one piece of the energy information and the management information meets a preset heating condition — S103

Sending the heating permission instruction to a second controller of the battery, so that the second controller establishes an electrical connection between a heating apparatus and an output end of the inverter — S104

Controlling the inverter to use the energy supply end to supply power to the heating apparatus to heat the battery — S105

FIG. 1

Receiving a battery heating request sent by a second controller of a battery — S201

Acquiring a cell temperature of the battery — S202

Generating a battery heating request when it is determined that the battery needs to perform a heating operation according to the cell temperature of the battery and the battery fails to meet a self-heating condition — 203

Receiving a heating permission instruction sent by a first controller — S204

Establishing an electrical connection between a heating apparatus and an output end of an inverter according to the heating permission instruction, and sending a heating preparation completion signal to the first controller, so that the first controller controls the inverter to use an energy supply end to supply power to the heating apparatus — S205

FIG. 2

```
                              ┌─────────┐
                              │  Start  │
                              └────┬────┘
                                   │
                          ◇ Determining, by a PCS, whether ◇ ──N──┐
                          ◇ a heating condition is met?     ◇      │
                                   │                                │
                                   Y                      ┌─────────────────┐
                                   │                      │ Responding, by  │
                          ◇ Receiving a battery ◇ ──N──→  │ the PCS, with   │
                          ◇ heating request?    ◇         │ heating refusion│
                                   │                      └─────────────────┘
                                   Y
                                   │
                      ┌──────────────────────────┐
                      │ Responding, by the PCS,   │
                      │ with heating permission   │
                      └─────────────┬────────────┘
                                   │
                          ◇ Does it request the PCS to heat a battery? ◇ ──N──→
                                   │
                                   Y
                                   │
              ┌──N── ◇ Receiving battery heating ◇
              │       ◇ preparation completion?  ◇
              │                    │
              │                    Y
              │                    │
      ◇ Timeout  ◇──N─┐   ┌──────────────────────┐
      ◇ determination ◇   │ Establishing battery │
      ◇ ?        ◇     │   │ heating voltage      │
              │        │   └──────────┬───────────┘
              Y        │              │
              │        │    ◇ Receiving a battery heating ◇ ──N──→
      ┌───────────┐    │    ◇ termination instruction?    ◇
      │ Responding │   │              │
      │ with a     │   │              Y
      │ heating    │   │    ┌──────────────────────┐
      │ no-signal  │   │    │ Turning off the      │
      │ instruction│   │    │ battery heating      │
      └─────┬──────┘   │    │ voltage              │
            │          │    └──────────┬───────────┘
            │          │    ┌──────────────────────┐
            │          │    │ Responding, by the   │
            │          │    │ PCS, with heating    │
            │          │    │ termination          │
            │          │    └──────────┬───────────┘
            └──────────┴───────────────┤
                              ┌────────┴────────┐
                              │      End        │
                              └─────────────────┘
```

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

| International application No. |
| --- |
| **PCT/CN2024/119454** |

**A.    CLASSIFICATION OF SUBJECT MATTER**

H01M 10/633(2014.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, WPABS, CNKI: 电池, 加热, 控制器, 温度, 检测, 逆变器, Battery, Heating, Controller, Temperature, Detecting, Inverter

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116960526 A (SOLAX POWER NETWORK TECHNOLOGY (ZHEJIANG) CO., LTD.) 27 October 2023 (2023-10-27) <br> description, paragraphs 4-94, and figures 1-11 | 1-15 |
| PX | CN 220895640 U (SOLAX POWER NETWORK TECHNOLOGY (ZHEJIANG) CO., LTD.) 03 May 2024 (2024-05-03) <br> claims 1-10 | 16-25 |
| X | CN 209141920 U (SAIC-GM-WULING AUTOMOBILE CO., LTD.) 23 July 2019 (2019-07-23) <br> description, paragraphs 5-46, and figures 1-3 | 16-25 |
| A | CN 111354996 A (BYD CO., LTD.) 30 June 2020 (2020-06-30) <br> entire document | 1-25 |
| A | CN 112952882 A (SUNGROW POWER SUPPLY CO., LTD.) 11 June 2021 (2021-06-11) <br> entire document | 1-25 |
| A | CN 115347276 A (ECOFLOW INC.) 15 November 2022 (2022-11-15) <br> entire document | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 November 2024** | **26 December 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | PCT/CN2024/119454 |

| Patent document cited in search report | | | Publication date (day/month/year) | Patent family member(s) | | | Publication date (day/month/year) |
|---|---|---|---|---|---|---|---|
| CN | 116960526 | A | 27 October 2023 | None | | | |
| CN | 220895640 | U | 03 May 2024 | None | | | |
| CN | 209141920 | U | 23 July 2019 | None | | | |
| CN | 111354996 | A | 30 June 2020 | None | | | |
| CN | 112952882 | A | 11 June 2021 | None | | | |
| CN | 115347276 | A | 15 November 2022 | WO | 2024036786 | A1 | 22 February 2024 |

Form PCT/ISA/210 (patent family annex) (July 2022)